(19)

Europäisches Patentamt

European Patent Office

Office européen des brevets

(11) **EP 4 598 018 A1**

(12) **EUROPEAN PATENT APPLICATION**
published in accordance with Art. 153(4) EPC

(43) Date of publication:
06.08.2025 Bulletin 2025/32

(21) Application number: 23869641.3

(22) Date of filing: 15.05.2023

(51) International Patent Classification (IPC):
$H04N\ 19/117^{(2014.01)}$ $H04N\ 19/82^{(2014.01)}$
$H04N\ 19/124^{(2014.01)}$ $G06F\ 17/15^{(2006.01)}$

(52) Cooperative Patent Classification (CPC):
G06F 17/15; H04N 19/117; H04N 19/124;
H04N 19/80; H04N 19/82

(86) International application number:
PCT/CN2023/094306

(87) International publication number:
WO 2024/066386 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.09.2022 CN 202211182900

(71) Applicant: ZTE CORPORATION
Shenzhen, Guangdong 518057 (CN)

(72) Inventors:
• HUANG, Cheng
  Shenzhen, Guangdong 518057 (CN)

• ZHOU, Yi
  Shenzhen, Guangdong 518057 (CN)
• GU, Chengming
  Shenzhen, Guangdong 518057 (CN)
• ZOU, Wenjie
  Shenzhen, Guangdong 518057 (CN)
• BAI, Yaxian
  Shenzhen, Guangdong 518057 (CN)

(74) Representative: Gualeni, Nadia et al
Jacobacci & Partners S.p.A.
Piazza della Vittoria, 11
25122 Brescia (IT)

(54) **VIDEO ENCODING AND DECODING LOOP FILTER METHOD, VIDEO DECODING METHOD, AND APPARATUS**

(57) Embodiments of the present disclosure provide a video coding and decoding loop filtering method, a video decoding method, and an apparatus. The video coding and decoding loop filtering method includes: filtering a reconstructed picture of a current picture by using a first filter, so as to obtain a first reconstructed video unit; filtering the reconstructed picture by using a second filter, so as to obtain a second reconstructed video unit; determining a filter coefficient according to neighborhood information contained in a convolution template of the first reconstructed video unit and the second reconstructed video unit; and filtering, based on the convolution template and the filter coefficient, the first reconstructed video unit, the second reconstructed video unit, and the filter coefficient to obtain a third reconstructed video unit. The problem in the related art of poor filtering adaptation effect caused by a weighted merge operation for a single pixel point may be solved. During a filtering correction process, a convolution-based filtering mode may add more neighboring pixel information as much as possible, so that a reconstructed value better approaches an original value, thereby achieving better output picture quality.

EP 4 598 018 A1

A reconstructed picture of a current picture is filtered by using a first filter, so as to obtain a first reconstructed video unit — S202

The reconstructed picture is filtered by using a second filter, so as to obtain a second reconstructed video unit — S204

A filter coefficient is determined according to neighborhood information contained in a convolution template of the first reconstructed video unit and the second reconstructed video unit, where the neighborhood information is information of neighboring pixel points around a pixel point in the convolution template — S206

Based on the convolution template and the filter coefficient, the first reconstructed video unit and the second reconstructed video unit are filtered to obtain a third reconstructed video unit — S208

Fig.2

## Description

### Cross-Reference to Related Application

The present disclosure claims priority to Chinese Patent Application CN202211182900.3, filed on September, 27, 2022 and entitled "Video Encoding and Decoding Loop filter method, Video Decoding Method, and Apparatus", the disclosure of which is hereby incorporated by reference in its entirety.

### Technical Field

Embodiments of the present disclosure relate to the field of communications, and in particular to a video coding and decoding loop filtering method, a video decoding method, and an apparatus.

### Background

Neural Network In-loop Filter (NNF) may be added as a new module to loop filtering, which may either replace original Deblocking Filter (DBF) and Sample Adaptive Offset (SAO) loop filtering modules, or operate in parallel with traditional filtering modules. Generally, in a codec, Adaptive Loop Filter (ALF) is still used after NNF filtering to further improve picture performance.

NNF filtering is generally in the form of offline training, and a weight obtained by offline training is loaded into a Versatile Video Coding (VVC) Test Model (VTM) (a reference software test platform of VVC) for use, which may achieve better results. As existing networks are generally offline and do not have an original picture as a reference in actual use, NNF may have a problem of excessive or insufficient strength. Based on this, when NNF filtering is performed, adaptation needs to be performed according to the characteristics of a current picture.

One of adaptation methods is to introduce a scaling factor for a scale operation. The scale operation enables a reconstructed frame after NNF filtering to approach an original frame in the form of fitting a straight line through a least squares method, so as to achieve the effect of the NNF filtering strength being adaptive to an original picture. In addition, a stripe-level or coding block-level switch operation is added to control the effective range of NNF filtering.

Another adaptation method is to add DBF filtering for weighting. A weighting solution includes: using only an output of DBF, using a Neural Network (NN) filtering solution and DBF filtering weighting, etc. Pixel points participating in weighting are current pixel points to be adapted. This solution may be flexibly selected and controlled at the strip-level or coding block-level.

However, the above two adaptation methods are both weighted merge operations for a single pixel point, so that the filtering adaptation effect is poor. There is still room for further improvement in the correction of NNF filtering. At present, no effective solution has yet been proposed for this problem.

### Summary

Embodiments of the present disclosure provide a video coding and decoding loop filtering method, a video decoding method, and an apparatus, so as to at least solve the problem in the related art of poor filtering adaptation effect caused by a weighted merge operation for a single pixel point.

According to an embodiment of the present disclosure, a video coding and decoding loop filtering method is provided, which includes the following operations: a reconstructed picture of a current picture is filtered by using a first filter, so as to obtain a first reconstructed video unit; the reconstructed picture is filtered by using a second filter, so as to obtain a second reconstructed video unit; a filter coefficient is determined according to neighborhood information contained in a convolution template of the first reconstructed video unit and the second reconstructed video unit. The neighborhood information is information of neighboring pixel points around a pixel point in the convolution template; based on the convolution template and the filter coefficient, the first reconstructed video unit and the second reconstructed video unit are filtered to obtain a third reconstructed video unit.

According to another embodiment of the present disclosure, a video decoding method is further provided, which includes the following operations: a bit stream containing a coded video sequence is acquired, and loop filtering control information corresponding to a loop filtering mode is obtained, and the loop filtering control information includes a filter coefficient; a reconstructed picture of a current picture is filtered by using a first filter, so as to acquire a first reconstructed video unit; the reconstructed picture of the current picture is filtered by using a second filter, so as to acquire a second reconstructed video unit; based on a convolution template of the first reconstructed video unit and the second reconstructed video unit, and the filter coefficient, the first reconstructed video unit and the second reconstructed video unit are filtered to obtain a third reconstructed video unit.

According to another embodiment of the present disclosure, a video coding and decoding loop filtering apparatus is further provided, which includes a first filtering module, a second filtering module, a first determination module, and a third filtering module. The first filtering module is configured to filter a reconstructed picture of a current picture by using a first filter, so as to obtain a first reconstructed video unit; the second filtering module is configured to filter the reconstructed picture of the current picture by using a second filter, so as to obtain a second reconstructed video unit; the first determination module is configured to determine a filter coefficient according neighborhood information contained in a convolution template of the first reconstructed video unit and the second reconstructed video unit; the neighborhood information is information of neighboring pixel points around a pixel point in the convolution template. The third filtering module is configured to filter, based on the convolution template and the filter coefficient, the first reconstructed video unit and the second reconstructed video unit to obtain a third reconstructed video unit.

According to another embodiment of the present disclosure, a video decoding apparatus is further provided, which includes an acquisition module, a first filtering module, a second filtering module, and a third filtering module. The acquisition module is configured to acquire a bit stream containing a coded video sequence, and obtain loop filtering control information corresponding to a loop filtering mode; the first filtering module is configured to filter a reconstructed picture of a current picture by using a first filter, so as to acquire a first reconstructed video unit; the second filtering module is configured to filter the reconstructed picture of the current picture by using a second filter, so as to acquire a second reconstructed video unit; the third filtering module is configured to filter, based on a convolution template of the first reconstructed video unit and the second reconstructed video unit, and a filter coefficient, the first reconstructed video unit and the second reconstructed video unit to obtain a third reconstructed video unit.

According to still another embodiment of the present disclosure, a computer-readable storage medium is further provided, in which a computer program is stored. When running, the computer program is configured to execute the steps in any of the above method embodiments.

According to still another embodiment of the present disclosure, an electronic apparatus is further provided, which includes a memory and a processor. The memory stores a computer program, and the processor is configured to run the computer program to execute the steps in any of the above method embodiments.

According to the embodiments of the present disclosure, the reconstructed picture of the current picture is filtered by using the first filter, so as to obtain the first reconstructed video unit; the reconstructed picture is filtered by using the second filter, so as to obtain the second reconstructed video unit; the filter coefficient is determined according to the neighborhood information contained in the convolution template of the first reconstructed video unit and the second reconstructed video unit, where the neighborhood information is the information of the neighboring pixel points around the pixel point in the convolution template; and based on the convolution template and the filter coefficient, the first reconstructed video unit and the second reconstructed video unit are filtered to obtain the third reconstructed video unit. The problem in the related art of poor filtering adaptation effect caused by the weighted merge operation for the single pixel point may be solved. During a filtering correction process, a convolution-based filtering mode may add more neighboring pixel information as much as possible, so that a reconstructed value better approaches an original value, thereby achieving better output picture quality.

**Brief Description of the Drawings**

Fig. 1 is a block diagram of a hardware structure of a mobile terminal of a video coding and decoding loop filtering method according to an embodiment of the present disclosure.
Fig. 2 is a flowchart of a video coding and decoding loop filtering method according to an embodiment of the present disclosure.
Fig. 3 is a first schematic diagram of a convolution model of Coefficient-Constrained Adaptive (CCA) filtering according to an embodiment.
Fig. 4 is a first schematic diagram of convolution-based filtering adaptation at a coding end according to an embodiment.
Fig. 5 is a second schematic diagram of convolution-based filtering adaptation at a coding end according to an embodiment.
Fig. 6 is a third schematic diagram of convolution-based filtering adaptation at a coding end according to an embodiment.
Fig. 7 is a fourth schematic diagram of convolution-based filtering adaptation at a coding end according to an embodiment.
Fig. 8 is a fifth schematic diagram of convolution-based filtering adaptation at a coding end according to an embodiment.
Fig. 9 is a sixth schematic diagram of convolution-based filtering adaptation at a coding end according to an embodiment.

Fig. 10 is a second schematic diagram of a convolution model of CCA filtering according to an embodiment.
Fig. 11 is a third schematic diagram of a convolution model of CCA filtering according to an embodiment.
Fig. 12 is a fourth schematic diagram of a convolution model of CCA filtering according to an embodiment.
Fig. 13 is a flowchart of a video decoding method according to an embodiment of the present disclosure.
Fig. 14 is a schematic diagram of a convolution-based filtering adaptation operation at a decoding end according to an embodiment.
Fig. 15 is a block diagram of a video coding and decoding loop filtering apparatus according to an embodiment of the present disclosure.
Fig. 16 is a block diagram of a video decoding apparatus according to an embodiment of the present disclosure.

## Detailed Description of the Embodiments

Embodiments of the present disclosure are described below with reference to the drawings and in conjunction with the embodiments in detail.

It is to be noted that terms "first", "second" and the like in the description, claims and the above drawings of the present disclosure are used for distinguishing similar objects rather than describing a specific sequence or a precedence order.

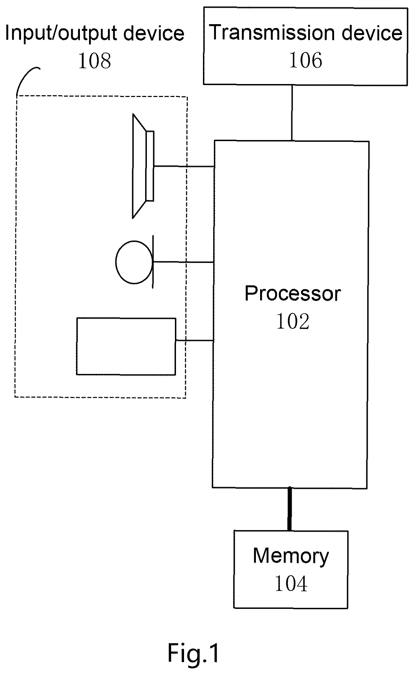

The method embodiment provided by the embodiments of the present disclosure may be implemented in a mobile terminal, a computer terminal or a similar computing apparatus. Taking running on a mobile terminal as an example, Fig. 1 is a block diagram of a hardware structure of a mobile terminal of a video coding and decoding loop filtering method according to an embodiment of the present disclosure. As shown in Fig. 1, the mobile terminal may include one or more (only one is shown in Fig. 1) processors 102 (the processor 102 may include, but is not limited to, a processing apparatus such as a Micro Controller Unit (MCU) or a programmable logic device) and a memory 104 for storing data. The above mobile terminal may further include a transmission device 106 and an input/output device 108 for communication functions. Those of ordinary skill in the art may understand that the structure shown in Fig. 1 is only schematic and not intended to limit the structure of the above mobile terminal. For example, the mobile terminal may further include more or fewer components than shown in Fig. 1, or has a different configuration from that shown in Fig. 1.

The memory 104 may be configured to store a computer program, for example, a software program and a module of application software, for example, a computer program corresponding to the video coding and decoding loop filtering method in the embodiments of the present disclosure. The processor 102 runs the computer program stored in the memory 104, thereby executing various functional applications and video coding and decoding loop filter, namely implementing the above method. The memory 104 may include a high speed Random Access Memory (RAM) and may further include a non-volatile memory such as one or more magnetic storage apparatuses, a flash memory, or other non-volatile solid state memories. In some examples, the memory 104 may further include memories remotely located relative to the processor 102, which may be connected to the mobile terminal over a network. The examples of such networks include, but are not limited to, the Internet, the Intranet, local area networks, mobile communication networks, and combinations thereof.

The transmission module 106 is configured to receive or send data via a network. A specific example of the network may include a wireless network provided by a communication provider of the mobile terminal. In one example, the transmission device 106 includes a Network Interface Controller (NIC) that may be connected to other network devices through a base station to communicate with the Internet. In one example, the transmission device 106 may be a Radio Frequency (RF) module, for communicating with the Internet wirelessly.

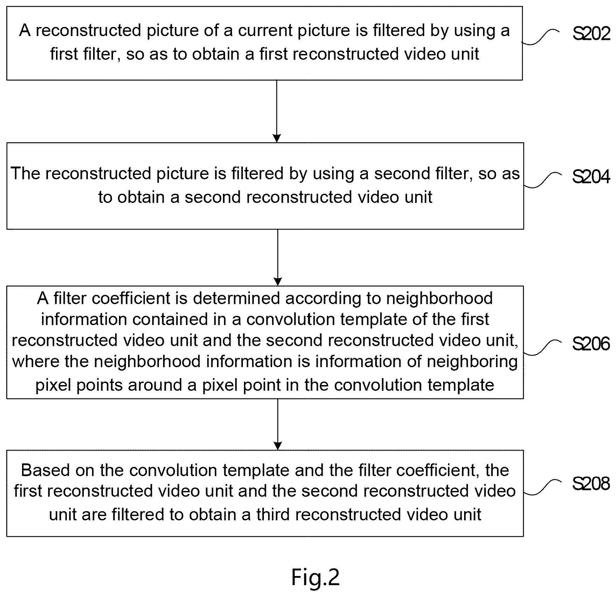

In the present embodiment, a video coding and decoding loop filtering method running on the above mobile terminal or a network architecture is provided. Fig. 2 is a flowchart of a video coding and decoding loop filtering method according to an embodiment of the present disclosure. As shown in Fig. 2, the method is applied to coding and decoding ends, and the flow includes the following steps.

At S202, a reconstructed picture of a current picture is filtered by using a first filter, so as to obtain a first reconstructed video unit.

In the present embodiment, the above S202 may specifically include: performing DBF on the reconstructed picture; or performing SAO loop filtering on the reconstructed picture; or performing DBF and SAO loop filtering on the reconstructed picture; or performing Luma Mapping with Chroma Scaling (LMCS) processing on the reconstructed picture.

At S204, the reconstructed picture is filtered by using a second filter, so as to obtain a second reconstructed video unit.

In the present embodiment, the above S204 may specifically include: performing neural network loop filtering on the reconstructed picture to obtain the second reconstructed video unit; or performing neural network loop filtering on the reconstructed picture, and performing weighted summation on a neural network loop filtering result and the first reconstructed video unit, so as to obtain the second reconstructed video unit; or performing neural network loop filtering on the reconstructed picture, and scaling the neural network loop filtering result according to an original picture, so as to obtain the second reconstructed video unit; or performing other loop filtering except the neural network loop filtering on the reconstructed picture to obtain the second reconstructed video unit. The other loop filtering includes at least one of the following: DBF, SAO loop filtering, and LMCS.

At S206, a filter coefficient is determined according to neighborhood information contained in a convolution template of the first reconstructed video unit and the second reconstructed video unit. The neighborhood information is information of neighboring pixel points around a pixel point in the convolution template.

At S208, based on the convolution template and the filter coefficient, the first reconstructed video unit and the second reconstructed video unit are filtered to obtain a third reconstructed video unit.

Through the above S202 to S208, the problem in the related art of poor filtering adaptation effect caused by a weighted merge operation for a single pixel point may be solved. During a filtering correction process, a convolution-based filtering mode can add more neighboring pixel information as much as possible, so that a reconstructed value better approaches an original value, thereby achieving better output picture quality.

In an embodiment, S208 may specifically include: for each pixel point in a video unit of the reconstructed picture and a video unit of the original picture, determining a difference between the pixel point at each neighborhood position in the convolution template and each pixel point, multiplying the differences respectively to obtain a first pixel product, and determining a difference between the pixel point of the video unit of the original picture and the pixel point of the video unit of the reconstructed picture to obtain a covariance; and determining, based on a Wiener filtering method, the filter coefficient according to the covariance.

In another embodiment, the above S208 may further specifically include: calculating, based on the first reconstructed video unit, a difference between a central pixel point and a neighborhood pixel point of the convolution template, and multiplying the difference by the filter coefficient of a corresponding position of the neighborhood pixel point to obtain a first result; at the same time, calculating, based on the second reconstructed video unit, the difference between the central pixel point and the neighborhood pixel point of the convolution template, and multiplying the difference by the filter coefficient of the corresponding position of the neighborhood pixel point to obtain a second result; and adding the first result, the second result, and the second reconstructed video unit, and then performing rounding processing to obtain the third reconstructed video unit.

DBF filtering may be specifically performed in the above S202, NN filtering may be specifically performed in the above S204, CCA filtering may be specifically performed in the above S208, and correspondingly, the third reconstructed video unit is a Coefficient-Constrained Adaptive Filter (CCAF) result. Filtering processing may be specifically performed in the following manner to obtain the third reconstructed video unit. The third reconstructed video unit is the following CCAF filtering result: $NNout' = int((NNout_C + w_0 * (DBFout_t - NNout_C) + w_1 * (DBFout_l - NNout_C) + w_2 * (DBFout_c - NNout_C) + w_3 * (DBFout_r - NNout_C) + w_4 * (DBFout_b - NNout_C) + w_5 * (NNout_t - NNout_C) + w_6 * (NNout_l - NNout_C) + w_7 * (NNout_r - NNout_C) + w_8 * (NNout_b - NNout_C)) >> BITS\_NUM + 0.5$, where $NNout'$ is the CCAF result, DBFout is the first reconstructed video unit, NNout is the second reconstructed video unit, $w_i$ is the i-th filter coefficient, $w_0$ to $w_4$ are the filter coefficients of the first reconstructed video unit, and $w_5$ to $w_8$ are the filter coefficients of the second reconstructed video unit.

In the present embodiment, the video unit of the reconstructed picture includes a reconstructed picture, or a slice, or a coding block, or a coding tree block.

In another embodiment, the above S208 may further specifically include at least one of the following: performing, based on the convolution template, filtering processing on a luma component of the first reconstructed video unit and the second reconstructed video unit according to the filter coefficient; performing, based on the convolution template, filtering processing on a first chroma component of the first reconstructed video unit and the second reconstructed video unit according to the filter coefficient; and performing, based on the convolution template, filtering processing on a second chroma component of the first reconstructed video unit and the second reconstructed video unit according to the filter coefficient.

In an optional embodiment, the method further includes: determining a first loss between a pixel of the video unit of the reconstructed picture and a pixel of the original picture after filtering according to the first reconstructed video unit, the second reconstructed video unit, and the filter coefficient; determining a second loss between the pixel of the video unit of the reconstructed picture and the pixel of the original picture before filtering according to the first reconstructed video unit, the second reconstructed video unit, and the filter coefficient; and determining whether to perform CCA filtering on the video unit of the current picture according to the first loss and the second loss.

In another optional embodiment, the method further includes: determining the first loss between the pixel of the video unit of the reconstructed picture and the pixel of the original picture after filtering according to the first reconstructed video unit, the second reconstructed video unit, and the filter coefficient; filtering through a preset filter coefficient, and determining a third loss between the pixel of the video unit of the reconstructed picture and the pixel of the original picture after filtering according to the first reconstructed video unit, the second reconstructed video unit, and the filter coefficient; and according to the first loss and the third loss, determining to perform filtering processing through the filter coefficient, or determining to perform filtering processing through the preset filter coefficient.

Specifically, the first loss after filtering through the filter coefficient is determined; the second loss before filtering through the filter coefficient is determined, or the third loss after filtering through the preset filter coefficient is determined; it is determined whether to perform CCA filtering according to the first loss and the second loss, or the first loss and the third loss; in a case where the first loss is less than the second loss, or the first loss is less than the third loss, it is determined to perform CCA filtering, and a flag of CCA filtering is set to 1; and in a case where the first loss is not less than the second loss, or the first loss is not less than the third loss, it is determined to not perform CCA filtering, and the flag of CCA filtering is set to 0.

Further, when the filter coefficient is the filter coefficient corresponding to each slice of the reconstructed picture, in a case where the first loss is less than the second loss, it is determined to perform CCA filtering on each slice of the reconstructed picture based on the filter coefficient corresponding to the slice; in a case where the first loss is not less than the second loss, it is determined to not perform CCA filtering on each slice of the reconstructed picture based on the filter coefficient corresponding to the slice; or in a case where the first loss is less than the second loss, it is determined to perform CCA filtering on each block of the reconstructed picture based on the filter coefficient corresponding to the slice where each block is located; and in a case where the first loss is not less than the second loss, it is determined to not perform CCA filtering on each block of the reconstructed picture based on the filter coefficient corresponding to the slice where each block is located. The block is one of the following: one or more Coding Tree Units (CTUs), one or more Coding Units (CUs), or a pixel block of a preset size.

In another optional embodiment, the method further includes: determining the first loss between the pixel of the video unit of the reconstructed picture and the pixel of the original picture after filtering according to the first reconstructed video unit, the second reconstructed video unit, and the filter coefficient; determining the second loss between the pixel of the video unit of the reconstructed picture and the pixel of the original picture before filtering according to the first reconstructed video unit, the second reconstructed video unit, and the filter coefficient; filtering the video unit of the current picture according to the filter coefficient of the neighboring video unit of the video unit of the current picture, and determining a fourth loss between the pixel of the video unit of the reconstructed picture and the pixel of the original picture after filtering; and according to the first loss, the second loss, and the fourth loss, determining, according to the first loss, the second loss, and the fourth loss, the filter coefficient used by the video unit of the current picture, and filtering according to the determined filter coefficient.

In another optional embodiment, the method further includes: determining the first loss between the pixel of the video unit of the reconstructed picture and the pixel of the original picture after filtering according to the first reconstructed video unit, the second reconstructed video unit, and the filter coefficient; determining the second loss between the pixel of the video unit of the reconstructed picture and the pixel of the original picture before filtering according to the first reconstructed video unit, the second reconstructed video unit, and the filter coefficient; and determining whether to filter the video unit of the current picture according to the first loss and the second loss, recalculating the filter coefficient for the video unit with filtering turned on, again determining whether to filter according to the first loss and the second loss, and confirming whether to filter the video unit of the current picture after repeating N times.

The convolution template in the present embodiment includes one of the following: a diamond-shaped template, a square template, and a cross template, specifically a 3*3 diamond-shaped template, a 5*5 diamond-shaped template, a 7*7 diamond-shaped template, a 3*3 square template, a 5*5 square template, a 7*7 square template, and a 5*5 cross template, which are only a few commonly used ones listed herein, and are not limited to the scope of protection of the present embodiment.

In an embodiment, the method further includes: coding the filter coefficient and the reconstructed picture to obtain a video bitstream. Herein, pps_cca_enabled_flag of the video bitstream is a flag of CCA filtering, pps_cca_enabled_flag is 1 or 0, where 1 indicates that CCA filtering is performed on the current slice, and 0 indicates that CCA filtering is not performed on the current slice; or under the premise that pps_cca_enabled_flag is 1, cca_block_flag of the video bitstream is configured to identify whether to perform CCA filtering on the current block, cca_block_flag is 1 or 0, 1 indicates that CCA filtering is performed on the current block, and 0 indicates that CCA filtering is not performed on the current block.

In the present embodiment, pps_cca_info_in_ph_flag of the video bitstream is configured to indicate a position of the filter coefficient. pps_cca_info_in_ph_flag is 1 or 0, where 1 indicates that the filter coefficient is in a picture header, and 0 indicates that the filter coefficient is in a slice header.

In another embodiment, the above S206 may specifically include: performing CCA filtering processing on the slice or block whose flag of CCA filtering is 1 according to a first filtering result, a second filtering result, and the filter coefficient corresponding to each slice, so as to obtain a CCA filtering result. Specifically, a first sub-filtering result of the luma component and/or the chroma component in the first filtering result is acquired, and a second sub-filtering result of the luma component and/or the chroma component in the second filtering result is acquired; and CCA filtering processing is performed on each slice or each block of the reconstructed picture according to the first sub-filtering result, the second sub-filtering result, and the filter coefficient, so as to obtain the CCA filtering result.

In an embodiment, the method further includes: coding the filter coefficient and the reconstructed picture to obtain a video bitstream. Herein, cca_luma_enabled_flag of the video bitstream is configured to identify whether to perform CCA filtering on the luma component of the current slice, cca_luma_enabled_flag is 1 or 0, where 1 indicates that CCA filtering is performed on the luma component of the current slice, and 0 indicates that CCA filtering is not performed on the luma component of the current slice; cca_cb_enabled_flag is configured to identify whether to perform CCA filtering on a chroma Cb component of the current slice, cca_cb_enabled_flag is 1 or 0, where 1 indicates that CCA filtering is performed on the chroma Cb component, and 0 indicates that CCA filtering is not performed on the chroma Cb componen; cca_cr_enabled_flag is configured to identify whether to perform CCA filtering on a chroma Cr component of the current slice, cca_cr_enabled_flag is 1 or 0, where 1 indicates CCA filtering is performed on the chroma Cr component of the current slice, and 0 indicates that CCA filtering is not performed on the chroma Cr component of the current slice; or cca_block_flag [i] is configured to identify whether to perform CCA filtering on the luma component or the chroma component of the current block, cca_block_flag[i] is 1 or 0, where 1 indicates that CCA filtering is performed on the luma component or the chroma component of the current block, and 0 indicates that CCA filtering is not performed on the luma component or the chroma component of the current block. Herein, i of 0 indicates the luma component, i of 1 indicates the chroma Cb component, and i of 2 indicates the chroma Cr component.

In another embodiment, the method further includes: repeatedly and iteratively executing the following steps N times to obtain the flag of CCA filtering of each block and the corresponding filter coefficient: for a target block whose flag of CCA filtering is 1, determining a target filter coefficient of the target block; and determining a first picture cost after performing CCA filtering processing on each block in the target block and a second picture cost before performing CCA filtering processing, and setting the flag of CCA filtering of the target block whose first picture cost is less than the second picture cost to 1.

In another embodiment, the method further includes: when the filter coefficient is the filter coefficient corresponding to each block of the reconstructed picture, executing the following steps for each block of the reconstructed picture to update the filter coefficient of each block through a coefficient merge mode, where the block being executed is called the current block: for the pixel point of the current block, determining the first picture cost after performing CCA filtering through the filter coefficient; if the filter coefficient exists in an upper neighboring block of the current block, determining a fourth picture cost of the current block as a picture cost of the upper neighboring block after performing CCA filtering processing through the filter coefficient; if the filter coefficient exists in a left neighboring block of the current block, determining a fifth picture cost of the current block as the first picture cost of the left neighboring block after performing CCA filtering processing through the filter coefficient; determining a sixth picture cost for the current block to perform CCA filtering processing not through the filter coefficient; and selecting the filter coefficient corresponding to the minimum picture cost from the first picture cost, the fourth picture cost, the fifth picture cost, and the sixth picture cost as the filter coefficient of the current block. The block is one of the following: one or more CTUs, one or more CUs, and a pixel block of a preset size.

In another embodiment, the method further includes: coding the filter coefficient and the reconstructed picture to obtain a video bitstream. Under the premise that the flag of CCA filtering is 1, cca_block_flag of the video bitstream is configured to identify whether to perform CCA filtering on the current block, cca_block_flag is 1 or 0, where 1 indicates that CCA filtering is performed on the current block, and 0 indicates that CCA filtering is not performed on the current block; in a case where cca_block_flag is 1, cca_block_merge_flag[i][Blk AddrX][Blk AddrY] is configured to identify whether the current block uses the coefficient merge mode, cca_block_merge_flag[i][BlkAddrX][Blk AddrY] is 1 or 0, where 1 indicates that the coefficient merge mode is used; and in a case where cca_block_merge_flag[i][Blk AddrX][Blk AddrY] is 1, cca_block_merge_mode_flag[0][Blk AddrX][Blk AddrY] is configured to identify the type of the coefficient merge mode of the current block, and cca_block_merge_flag[0][Blk AddrX][Blk AddrY] is 1 or 0, where 1 indicates that the filter coefficient of the upper neighboring block is used, and 0 indicates that the filter coefficient of the left neighboring block is used. Herein, i of 0 indicates the luma component, i of 1 indicates the chroma Cb component, and i of 2 indicates the chroma Cr component.

During an NN filtering correction process, the present embodiment introduces a multi-point neighborhood pixel convolution-based filtering design adaptation algorithm (CCAF). Since existing solutions are all weighted merge operations for the single pixel point, during the NN filtering correction process, a convolution-based filtering mode of CCAF can add more neighboring pixel information as much as possible, so that the reconstructed value better approaches the original value, thereby achieving better output picture quality.

In the present embodiment, a convolution-based filtering adaptation algorithm at the coding end is provided, and the flow of a CCA filtering method at the coding end includes the following operations.

At S1, DBF filtering is performed on the reconstructed picture after LMCS, and a result after DBF filtering is stored in recBuf.

At S2, NN filtering is performed on the reconstructed picture after LMCS, and a result of NN filtering is stored in nnoutBuf.

At S3, the convolution-based filtering adaptation algorithm is performed. The results in two bufs stored in the above steps are sent to a CCAF link, a CCAF filtering coefficient is calculated in combination with the original picture, and a filtering operation is performed.

For the pixel point of one slice, a covariance is calculated according to the neighborhood information contained in the convolution template, the CCAF filtering coefficient is calculated according to the covariance, and the filtering operation is performed according to the convolution template.

The neighborhood information in the present embodiment refers to the neighborhood information around a position pixel point in a CCF convolution template.

The neighborhood information participating in the calculation of the CCA filtering coefficient includes: neighborhood information of a position pixel point in a Rec picture, neighborhood information of a position pixel point in an NNin picture, and neighborhood information of a position pixel point in an NNout picture.

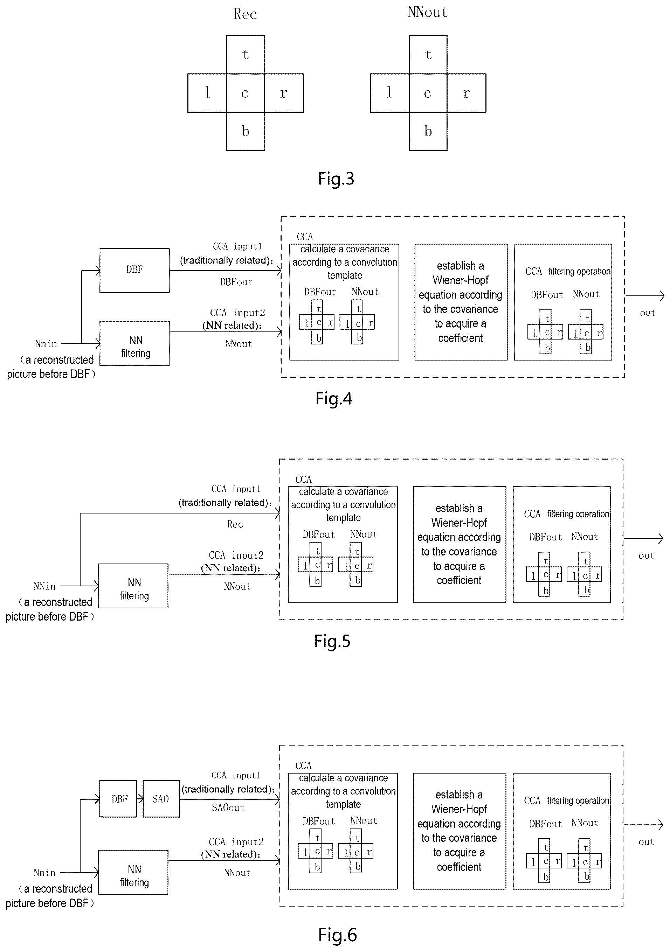

As an optional implementation, Fig. 3 is a first schematic diagram of a convolution model of CCA filtering according to an embodiment. As shown in Fig. 3, the neighborhood information of CCA filtering includes that: c indicates a pixel to be filtered in the middle, t indicates an upper neighborhood pixel, b indicates a lower neighborhood pixel, l indicates a left neighborhood pixel, and r indicates a right neighborhood pixel.

Fig. 4 is a first schematic diagram of convolution-based filtering adaptation at a coding end according to an embodiment. As shown in Fig. 4, the flow of applying the convolution-based filtering adaptation algorithm at the coding end is as shown in the figure above. An output (DBFout) of a traditional filtering module (e.g., DBF) and an output (NNout) of an NN filtering module are used as inputs of a CCA module, and a multi-point weighted operation is performed on the output of the traditional module and the output of the NN module.

The adaptation algorithm here may be extended to any two filtering solutions, and is not limited to DBF filtering and NN filtering.

At S1, DBF filtering is performed, namely, DBF filtering is performed on the reconstructed picture Rec after LMCS, and a result of DBF filtering is stored in dbfoutBuf.

At S2: NN filtering is performed, namely, NN filtering is performed after the reconstructed picture of LMCS is obtained.

First, various data that need to be input into the network are configured, for example, a reconstructed picture sample, Quantization Parameter (QP) information, CU division information, deblocking filtering information, a prediction sample, etc., and then the information is input into an NN filtering network module to obtain a reconstructed picture sample after NN filtering processing. The result of NN filtering is stored in NNoutBuf.

At S3, the convolution-based filtering adaptation algorithm is performed, the results in two bufs stored in the above steps are sent to a CCA link, a coefficient is calculated, and the filtering operation is performed. The specific steps are as follows.

The principle of a method using Wiener filtering is as follows.

A method for calculating a filtered Mean Squared Error MSE is as follows.

$$MSE = E\left[\left(f[\mathbf{i}] - o[\mathbf{i}]\right)^2\right] = E\left[\left(\sum_{n=0}^{N-1} c_n \cdot r[\mathbf{i} + \mathbf{p}_n] - o[\mathbf{i}]\right)^2\right]$$

Where n indicates the number of coefficients, c is the calculated coefficient, and p is an offset of a center relative coordinate. The above formula is decomposed.

$$\frac{\partial MSE}{\partial c_m} = E\left[2\left(\sum_{n=0}^{N-1} c_n \cdot r[\mathbf{i} + \mathbf{p}_n] - o[\mathbf{i}]\right) \cdot r[\mathbf{i} + \mathbf{p}_m]\right], m = 0,1,...,N-1$$

$$E\left[2\left(\sum_{n=0}^{N-1} c_n \cdot r[\mathbf{i} + \mathbf{p}_n] - o[\mathbf{i}]\right) \cdot r[\mathbf{i} + \mathbf{p}_m]\right] = 0$$

$$E\left(\sum_{n=0}^{N-1} c_n \cdot r[\mathbf{i} + \mathbf{p}_n] \cdot r[\mathbf{i} + \mathbf{p}_m]\right) = E\left(o[\mathbf{i}] \cdot r[\mathbf{i} + \mathbf{p}_m]\right)$$

$$\sum_{n=0}^{N-1} c_n \cdot E\left(r[\mathbf{i} + \mathbf{p}_n] \cdot r[\mathbf{i} + \mathbf{p}_m]\right) = E\left(o[\mathbf{i}] \cdot r[\mathbf{i} + \mathbf{p}_m]\right)$$

$$\begin{bmatrix} E(r[i+p_0] \cdot r[i+p_0]) & E(r[i+p_1] \cdot r[i+p_0]) & \cdots & E(r[i+p_{N-1}] \cdot r[i+p_0]) \\ E(r[i+p_0] \cdot r[i+p_1]) & E(r[i+p_1] \cdot r[i+p_1]) & \cdots & E(r[i+p_{N-1}] \cdot r[i+p_1]) \\ \vdots & \vdots & \ddots & \cdots \\ E(r[i+p_0] \cdot r[i+p_{N-1}]) & E(r[i+p_1] \cdot r[i+p_{N-1}]) & \cdots & E(r[i+p_{N-1}] \cdot r[i+p_{N-1}]) \end{bmatrix} \cdot \begin{bmatrix} c_0 \\ c_1 \\ \vdots \\ c_{N-1} \end{bmatrix} = \begin{bmatrix} E(o[i]) \cdot r[i+p_0] \\ E(o[i]) \cdot r[i+p_1] \\ \vdots \\ E(o[i]) \cdot r[i+p_{N-1}] \end{bmatrix}$$

The coefficient is solved according to the above equations, and the optimal performance for one pixel point may be obtained.

For multiple pixels of one slice, the following equation may be listed.

$$\begin{bmatrix} \sum_{i \in R} r[i+p_0] \cdot r[i+p_0] & \sum_{i \in R} r[i+p_1] \cdot r[i+p_0] & \cdots & \sum_{i \in R} r[i+p_{N-1}] \cdot r[i+p_0] \\ \sum_{i \in R} r[i+p_0] \cdot r[i+p_1] & \sum_{i \in R} r[i+p_1] \cdot r[i+p_1] & \cdots & \sum_{i \in R} r[i+p_{N-1}] \cdot r[i+p_1] \\ \vdots & \vdots & \ddots & \vdots \\ \sum_{i \in R} r[i+p_0] \cdot r[i+p_{N-1}] & \sum_{i \in R} r[i+p_1] \cdot r[i+p_{N-1}] & \cdots & \sum_{i \in R} r[i+p_{N-1}] \cdot r[i+p_{N-1}] \end{bmatrix} \cdot \begin{bmatrix} c_0 \\ c_1 \\ \vdots \\ c_{N-1} \end{bmatrix} = \begin{bmatrix} \sum_{i \in R} o[i] \cdot r[i+p_0] \\ \sum_{i \in R} o[i] \cdot r[i+p_1] \\ \vdots \\ \sum_{i \in R} o[i] \cdot r[i+p_{N-1}] \end{bmatrix}.$$

This equation is solved to obtain the filter coefficient.

At S3-a, the operation of calculating the covariance includes the following operations.

**(1) For each** pixel point, a difference between each position of a convolution template and a center point is calculated, and the differences are multiplied respectively. At the same time, an org-current point pixel value of a current point is calculated.

(2) The calculation of (1) is performed on all pixel points of one slice.

In the main solution, a filtering template is set to the template shown in Fig. 3 (the template is not limited to this template and may be expanded or reduced).

At S3-b, the operation of calculating the CCA filtering coefficient based on the covariance includes the following operation.

According to the covariance calculated in S3-a, an equation is listed and the filter coefficient is solved. ($c_0$ to $c_8$)

$$\begin{bmatrix} \sum_{i \in R} r[i+p_0] \cdot r[i+p_0] & \sum_{i \in R} r[i+p_1] \cdot r[i+p_0] & \cdots & \sum_{i \in R} r[i+p_{N-1}] \cdot r[i+p_0] \\ \sum_{i \in R} r[i+p_0] \cdot r[i+p_1] & \sum_{i \in R} r[i+p_1] \cdot r[i+p_1] & \cdots & \sum_{i \in R} r[i+p_{N-1}] \cdot r[i+p_1] \\ \vdots & \vdots & \ddots & \vdots \\ \sum_{i \in R} r[i+p_0] \cdot r[i+p_{N-1}] & \sum_{i \in R} r[i+p_1] \cdot r[i+p_{N-1}] & \cdots & \sum_{i \in R} r[i+p_{N-1}] \cdot r[i+p_{N-1}] \end{bmatrix} \cdot \begin{bmatrix} c_0 \\ c_1 \\ \vdots \\ c_{N-1} \end{bmatrix} = \begin{bmatrix} \sum_{i \in R} o[i] \cdot r[i+p_0] \\ \sum_{i \in R} o[i] \cdot r[i+p_1] \\ \vdots \\ \sum_{i \in R} o[i] \cdot r[i+p_{N-1}] \end{bmatrix}.$$

Because the coefficient directly obtained by the formula is a floating-point number, the coefficients are quantized to integers ($w_0$ to $w_8$).

$$w_i = \text{int}((c_i << BITS\_NUM + 0.5)).$$

Here, BITS_NUM takes 7, o(i) is the pixel value of the reconstructed picture, r(i) is the pixel value of the picture after NN filtering, pi is a position offset between the pixel point and the neighboring pixel point, and shifting the coefficient to the left is to make the coefficient integer.

At S3-c, after a CCA output signal is constructed to obtain the calculated filtering coefficient, the filtering operation is performed by using the following formula:

$$\begin{aligned} NNout' = \text{int}(( & NNout_C + w_0 * (DBFout_t - NNout_C) + w_1 * (DBFout_l - NNout_C) \\ & + w_2 * (DBFout_c - NNout_C) + w_3 * (DBFout_r - NNout_C) + w_4 * (DBFout_b - NNout_C) \\ & + w_5 * (NNout_t - NNout_C) + w_6 * (NNout_l - NNout_C) + w_7 * (NNout_r - NNout_C) \\ & + w_8 * (NNout_b - NNout_C)) >> BITS\_NUM + 0.5). \end{aligned}$$

Where DBFout refers to the output after DBF, NNout refers to the output after passing through an NN filter, $w_i$ refers to the i-th filtering coefficient, $w_0$ to $w_4$ are the filter coefficients for the output of DBF, and $w_5$ to $w_8$ are the filter coefficients for the output of NN.

(Because the coefficient is left-shifted in S3-b, the coefficient needs to be right-shifted after use.)

Degradation to a DBF and NN weighted solution is performed.

The neighborhood information is removed, except for $w_2$, all other w coefficients are 0.

$$\text{NNout}' = \text{NNout}_C + w_2 * (\text{DBFout}_c - \text{NNout}_C) = w_2 * \text{DBFout}_c + (1 - w_2)^*\text{NNout}_C.$$

Degradation to scale is performed, namely, the neighborhood information is removed, except for $w_2$, all other w coefficients are 0. $\text{DBFout}_c$ is changed to $\text{Rec}_c$ (i.e., NNin, which is also the reconstructed value before DBF).

$$\text{NNout}' = \text{NNout}_C + w_2 * (\text{Rec}_c - \text{NNout}_C) = w_2 * \text{Rec}_{c_c} + (1 - w_2)^*\text{NNout}_C.$$

Optional implementation 1: inputs of CCA are changed.

Because many combination modes of the NN filtering module and the traditional filtering modules occur at present, the inputs of the CCA module are not fixed to the mode in the main solution. The output 1 and the input 2 may be modified respectively.

Mode 1-1: the input 1 of CCA is changed, specifically, Rec is changed. In the Rec main solution, Rec indicates the output of DBF. In actual operation, Rec may also be the reconstructed picture after passing through the traditional filtering modules such as DBF and SAO, or the output before DBF.

Rec indicates the reconstructed picture before DBF. Fig. 5 is a second schematic diagram of convolution-based filtering adaptation at a coding end according to an embodiment. As shown in Fig. 5, the following steps are included.

At S1, the reconstructed picture after LMCS is stored into recBuf.

At S2, NN filtering is performed on the reconstructed picture after LMCS, and the result of NN filtering is stored in nnoutBuf.

At S3, the convolution-based filtering adaptation algorithm is performed. The results in two bufs stored in the above steps are sent to the CCA link, the coefficient is calculated, and the filtering operation is performed.

For the pixel point of one slice, the covariance is calculated according to the neighborhood information contained in the convolution template; and the CCA filtering coefficient is calculated according to the covariance, and the filtering operation is performed according to the convolution template.

Rec indicates the reconstructed picture after DBF and SAO. Fig. 6 is a third schematic diagram of convolution-based filtering adaptation at a coding end according to an embodiment. As shown in Fig. 6, the steps are as follows.

At S1, DBF and SAO loop filtering are performed on the reconstructed picture after LMCS, and a result after SAO loop filtering is stored in saooutBuf.

At S2, NN filtering is performed on the reconstructed picture after LMCS, and the result of NN filtering is stored in nnoutBuf.

At S3, the convolution-based filtering adaptation algorithm is performed. The results in two bufs stored in the above steps are sent to the CCA link, the coefficient is calculated, and the filtering operation is performed.

For the pixel point of one slice, the filtering coefficient is calculated according to the convolution template, the CCA filtering coefficient is calculated according to the covariance, and the filtering operation is performed according to the convolution template.

Mode 1-2: an input 2 of CCA may also be changed, and Nnrelated is changed. In the main solution, NNrelated indicates the output of NN, but due to the offline performance of NN, the weighted operation on reconstructed pixels is generally performed after NN. Therefore, NNrelated may also be the output related to NN. The following operations are included.

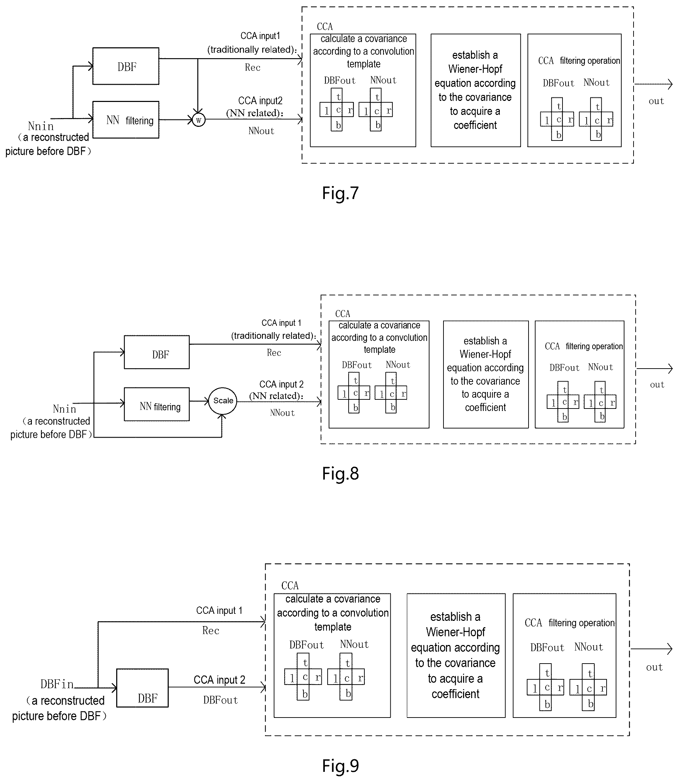

NNrelated indicates a weighted result of the output of NN and DBF. Fig. 7 is a fourth schematic diagram of convolution-based filtering adaptation at a coding end according to an embodiment. As shown in Fig. 7, the following operations are included.

At S1, DBF filtering is performed on the reconstructed picture after LMCS, and the result after DBF filtering is stored in dbfoutBuf.

At S2, NN filtering is performed on the reconstructed picture after LMCS, and the result of NN filtering is stored in nnoutBuf.

The pixel value in recBuf and the pixel value in nnoutBuf are weighted, and the weighted result is put into nnoutBuf.

$$\text{nnout}=\text{dbfout}*(1-k)+\text{nnout}*k.$$

The range of k is [0, 1], for example, k may be 0.75, 0.5, etc.

At S3, the convolution-based filtering adaptation algorithm is performed. The results in two bufs stored in the above steps are sent to the CCA link, the coefficient is calculated, and the filtering operation is performed.

For the pixel point of one slice, the covariance is calculated according to the neighborhood information contained in the convolution template; and the CCA filtering coefficient is calculated according to the covariance, and the filtering operation is performed according to the convolution template.

NNrelated indicates a result after scale of NN. Fig. 8 is a fifth schematic diagram of convolution-based filtering adaptation at a coding end according to an embodiment. As shown in Fig. 8, the following operations are included.

At S1, DBF filtering is performed on the reconstructed picture after LMCS, and the result after DBF filtering is stored in recBuf.

At S2, NN filtering is performed on the reconstructed picture after LMCS, and the result of NN filtering is stored in nnoutBuf.

A scale operation is performed on the pixel value after LMCS (that is, the input of NN) and the pixel value in nnoutBuf, and the result is put into nnoutBuf. The scale may be calculated by a least squares method or may also be a preset value.

$$nnout=nnin+scale*(nnout-nnin).$$

At S3, the convolution-based filtering adaptation algorithm is performed. The results in two bufs stored in the above steps are sent to the CCA link, the coefficient is calculated, and the filtering operation is performed.

For the pixel point of one slice, the covariance is calculated according to the neighborhood information contained in the convolution template; and the CCA filtering coefficient is calculated according to the covariance, and the filtering operation is performed according to the convolution template.

Mode 1-3: CCA with a relatively wide range may also be used, CCA is not limited to use in an NN-based coding and decoding framework, but may also be used in traditional coding and decoding frameworks.

For example, the reconstructed picture without DBF and the reconstructed picture after DBF may be used as two inputs of CCA to perform a CCA operation. Fig. 9 is a sixth schematic diagram of convolution-based filtering adaptation at a coding end according to an embodiment. As shown in Fig. 9, the steps are as follows.

At S1, the reconstructed picture after LMCS is stored into recBuf.

At S2, NN filtering is performed on the reconstructed picture after LMCS, and the result of NN filtering is stored in dbfoutBuf.

At S3, a CCA adaptation algorithm is performed. The results in two bufs stored in the above steps are sent to the CCA link, the coefficient is calculated, and the filtering operation is performed.

For the pixel point of one slice, the covariance is calculated according to the neighborhood information contained in the convolution template; and the CCA filtering coefficient is calculated according to the covariance, and the filtering operation is performed according to the convolution template.

Optional implementation 2: CCA decision mechanism.

Because the coefficient needs to be transmitted to the decoding end after being calculated at the coding end, the transmission overhead of the video coding bitstream may be increased. When there are too many pixels, calculating a set of coefficients for one slice may have no performance gain on some pixel points or cause performance degradation. Therefore, the solution proposes multiple decision mechanism solutions.

Optional implementation 2-1: switch control.

Slice-level switch: DBF filtering is performed on the reconstructed picture after LMCS, and the result after DBF filtering is stored in dbfoutBuf. NN filtering is performed on the reconstructed picture after LMCS, and the result of NN filtering is stored in nnoutBuf. The convolution-based filtering adaptation algorithm is performed. The results in two bufs stored in the above steps are sent to the CCA link, the coefficient is calculated, and the filtering operation is performed.

For the pixel point of one slice, the covariance is calculated according to the neighborhood information contained in the convolution template, and the CCA filtering coefficient is calculated according to the covariance. The slice-level switch control includes the following operations.

(1) A cost (cost indicates RDcost) of an adaptive coefficient obtained in 3-b is calculated.
(2) A cost of the reconstructed picture without using CCA is calculated.
(3) The current slice competes using CCA and not using CCA, and the optimal solution is identified and transmitted. If there is no performance gain or performance degradation after CCA, the flag is set to 0, indicating that the current slice does not perform the CCA operation, otherwise the flag is 1, indicating that the current slice performs the CCA operation.

For the slice whose flag is 1, the CCA operation is performed according to the method in S2-b of Embodiment 1 to obtain the reconstructed picture. The class whose flag is 0 is not processed.

Block-level switch: DBF filtering is performed on the reconstructed picture after LMCS, and the result after DBF filtering is stored in dbfoutBuf. NN filtering is performed on the reconstructed picture after LMCS, and the result of NN filtering is stored in nnoutBuf. The convolution-based filtering adaptation algorithm is performed. The results in two bufs stored in the above steps are sent to the CCA link, the coefficient is calculated, and the filtering operation is performed.

For the pixel point of one slice, the covariance is calculated according to the neighborhood information contained in the convolution template, and the CCA filtering coefficient is calculated according to the covariance. The block-level switch control includes the following operations.

(1) The cost (cost indicates RDcost) of each block after using the adaptive coefficient obtained in 3-b is calculated.
(2) The cost of the reconstructed picture of each block without using CCA is calculated.
(3) Each block competes using CCA and not using CCA, and the optimal solution is identified and transmitted. If there is no performance gain or performance degradation after CCA, the flag is set to 0, indicating that this block does not perform the CCA operation, otherwise the flag is 1, indicating that this block performs the CCA operation.

For the block whose flag is 1, the CCA operation is performed according to the method in S2-b of Embodiment 1 to obtain the reconstructed picture. The block whose flag is 0 is not processed.

A coefficient optimization solution in the present embodiment includes: performing DBF filtering on the reconstructed picture after LMCS, and storing the result after DBF filtering in dbfoutBuf; performing NN filtering on the reconstructed picture after LMCS, and storing the result of NN filtering in nnoutBuf; performing the convolution-based filtering adaptation algorithm; and sending the results in two bufs stored in the above steps to the CCA link, calculating the coefficient, and performing the filtering operation.

For the pixel point of one slice, the covariance is calculated according to the neighborhood information contained in the convolution template, and the CCA filtering coefficient is calculated according to the covariance. The coefficient optimization includes the following operations.

(1) The cost of each block (block may refer to a CTU or an operation block of the NN) before and after using CCA is calculated. If there is no performance gain or performance degradation after CCA, the flag is set to 0, indicating that this block does not perform the CCA operation, otherwise the flag is 1, indicating that this block performs the CCA operation.
(2) For the block whose flag is 1, a set of coefficients is recalculated, and S(1) is repeated. The coefficient is iterated N times (N is not limited here and may be 3) according to this step, the cost corresponding to the coefficient is calculated each time, and the optimized coefficient and the final flag of each block are obtained through comparison.

For the block whose flag is 1, the CCA operation is performed according to the method in S2-b of Embodiment 1 to obtain the reconstructed picture. The block whose flag is 0 is not processed.

Optional implementation 2-2: competition decision.

The operation that a preset coefficient competes with an adaptive coefficient for screening includes the following operations.

At S1, DBF filtering is performed on the reconstructed picture after LMCS, and the result after DBF filtering is stored in dbfoutBuf.

At S2, NN filtering is performed on the reconstructed picture after LMCS, and the result of NN filtering is stored in nnoutBuf.

At S3, the convolution-based filtering adaptation algorithm is performed. The results in two bufs stored in the above steps are sent to the CCA link, the coefficient is calculated, and the filtering operation is performed.

For the pixel point of one slice, the covariance is calculated according to the neighborhood information contained in the convolution template, and the CCA filtering coefficient is calculated according to the covariance. The competition decision includes the following operations.

(1) The cost (cost indicates RDcost) of the adaptive coefficient obtained in 3-b is calculated.
(2) The cost is calculated for the preset coefficient (the preset coefficient is set according to statistical information) in 3-c.
(3) The adaptive coefficient competes with the preset coefficient, and the optimal solution is identified and transmitted.

The coefficient with small cost is used to filter according to S3-c of Embodiment 1.

Optional implementation 3: block-level CCA.

Because the coefficients of the above solutions are all for the slice level, the adaptability of using only one set of coefficients for the pixels of one slice may not be high, so that this solution proposes a block-level CCA technology. The block-level CCA includes the following operation steps.

At S1, DBF filtering is performed on the reconstructed picture after LMCS, and the result after DBF filtering is stored in dbfoutBuf.

At S2, NN filtering is performed on the reconstructed picture after LMCS, and the result of NN filtering is stored in nnoutBuf.

At S3, the convolution-based filtering adaptation algorithm is performed. The results in two bufs stored in the above steps are sent to the CCA link in units of blocks, the coefficient is calculated, and the filtering operation is performed.

For the pixel point of one block, the covariance is calculated according to the neighborhood information contained in the convolution template. The CCA filtering coefficient is calculated according to the covariance, and the filtering operation is performed on the current block according to the convolution template. The specific operations are similar to those described above, which will not be elaborated herein.

Block-level switch control is added.

At S1, DBF filtering is performed on the reconstructed picture after LMCS, and the result after DBF filtering is stored in dbfoutBuf.

At S2, NN filtering is performed on the reconstructed picture after LMCS, and the result of NN filtering is stored in nnoutBuf.

At S3, the convolution-based filtering adaptation algorithm is performed. The results in two bufs stored in the above steps are sent to the CCA link in units of blocks, the coefficient is calculated, and the filtering operation is performed.

For the pixel point of one block, the covariance is calculated according to the neighborhood information contained in the convolution template, the CCA filtering coefficient is calculated according to the covariance, and the cost before CCA and the cost after CCA are used for each block. If there is no performance gain or performance degradation after CCA, the flag is set to 0, indicating that this block does not perform the CCA operation, otherwise the flag is 1, indicating that this block performs the CCA operation.

For the block whose flag is 1, the CCA operation is performed according to the method in S3-c of Embodiment 1 to obtain the reconstructed picture. The block whose flag is 0 is not processed.

Merge mode: because the overhead of a block-level transmission coefficient is relatively large, a coefficient merge mode is added to save some transmission overhead. For the current block, because a neighboring area has a certain correlation, the current block may use the coefficient calculated by the upper or left block to complete CCA filtering of the current block. The steps are as follows.

At S1, DBF filtering is performed on the reconstructed picture after LMCS, and the result after DBF filtering is stored in dbfoutBuf.

At S2, NN filtering is performed on the reconstructed picture after LMCS, and the result of NN filtering is stored in nnoutBuf.

At S3, the convolution-based filtering adaptation algorithm is performed. The results in two bufs stored in the above steps are sent to the CCA link in units of blocks, the coefficient is calculated, and the filtering operation is performed.

For the pixel point of one block, the covariance is calculated according to the neighborhood information contained in the convolution template, and the CCA filtering coefficient is calculated according to the covariance. The main merge steps are as follows.

(1) The cost after using the adaptive coefficient in 3-b is calculated.
(2) If the CCA coefficient exists in the upper block of the current block, the cost of directly using the upper block coefficient for the current block is calculated.
(3) If the CCA coefficient exists in the left block of the current block, the cost of directly using the left block coefficient for the current block is calculated.
(4) The cost without CCA is calculated.
(5) The above 4 costs are compared. The optimal solution for the current block is selected.

For the block whose flag is 1, the CCA operation is performed according to the method in S3-c of Embodiment 1 to obtain the reconstructed picture. The block whose flag is 0 is not processed.

Optional implementation 4: the convolution template is changed.

A 3x3 diamond-shaped template is used in the main solution. An expansion module may merge more information during a CCA process, and a reduction template may save bits of CCA during the transmission process. Based on this, there are more alternative solutions for the template.

The following solution only modifies the shape of the convolution template. The overall operation steps are as follows.

At S1, DBF filtering is performed on the reconstructed picture after LMCS, and the result after DBF filtering is stored in dbfoutBuf.

At S2, NN filtering is performed on the reconstructed picture after LMCS, and the result of NN filtering is stored in nnoutBuf.

At S3, the convolution-based filtering adaptation algorithm is performed. The results in two bufs stored in the above steps are sent to the CCA link, the coefficient is calculated, and the filtering operation is performed.

For the pixel point of one block, the covariance is calculated according to the neighborhood information contained in the convolution template, the CCA filtering coefficient is calculated according to the covariance, and the filtering operation is performed according to the convolution template.

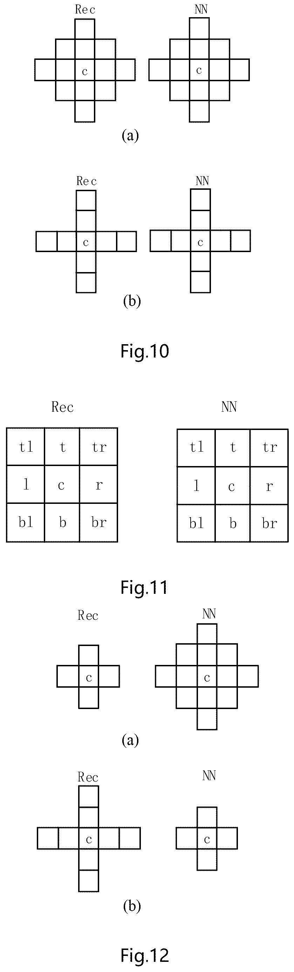

The present embodiment is not limited to the 3x3 diamond-shaped template. Fig. 10 is a second schematic diagram of a convolution model of CCA filtering according to an embodiment. As shown in Fig. 10, the template may be a 5x5 template or a 7x7 template.

The present embodiment is not limited to the diamond-shaped template. Fig. 11 is a third schematic diagram of a convolution model of CCA filtering according to an embodiment. As shown in Fig. 11, the template may also be in the shape of a square or the like.

Fig.12 is a fourth schematic diagram of a convolution model of CCA filtering according to an embodiment. As shown in Fig. 12, the shapes of the Rec and NN templates may be different.

In the present embodiment, the center point of the main solution is the center point of the NN template, and may also be the center point of Rec.

$$
\begin{aligned}
\mathrm{NNout}' = \mathrm{int}(( & \mathrm{DBFout}_c + w_0 * (\mathrm{DBFout}_t - \mathrm{DBFout}_c) + w_1 * (\mathrm{DBFout}_l - \mathrm{DBFout}_c) \\
& + w_2 * (\mathrm{DBFout}_r - \mathrm{DBFout}_c) + w_3 * (\mathrm{DBFout}_b - \mathrm{DBFout}_c) + w_4 * (\mathrm{NNout}_t - \mathrm{DBFout}_c) \\
& + w_5 * (\mathrm{NNout}_l - \mathrm{DBFout}_c) + w_6 * (\mathrm{NNout}_c - \mathrm{DBFout}_c) + w_7 * (\mathrm{NNout}_r - \mathrm{DBFout}_c) \\
& + w_8 * (\mathrm{NNout}_b - \mathrm{DBFout}_c)) >> \mathrm{BITS\_NUM} + 0.5).
\end{aligned}
$$

Optional implementation 5: CCA of different components and cross components CCA. The CCA mode does not limit the component, and the luma and the chroma may be used or turned off separately.

Both the luma and the chroma use CCA, and the steps are as follows.

At S1, DBF filtering is performed on the reconstructed picture after LMCS, and the result after DBF filtering is stored in dbfoutBuf.

At S2, NN filtering is performed on the reconstructed picture after LMCS, and the result of NN filtering is stored in nnoutBuf.

At S3, the convolution-based filtering adaptation algorithm is performed. The results of the luma and chroma components in two bufs stored in the above steps are respectively sent to the CCA link, the coefficient is calculated, and the filtering operation is performed.

For the pixel point of one slice, the covariance is calculated according to the neighborhood information contained in the convolution template, the CCA filtering coefficient is calculated according to the covariance, and the filtering operation is performed according to the convolution template.

Only the luma uses CCA, and the steps are as follows.

At S1, DBF filtering is performed on the reconstructed picture after LMCS, and the result after DBF filtering is stored in dbfoutBuf.

At S2, NN filtering is performed on the reconstructed picture after LMCS, and the result of NN filtering is stored in nnoutBuf.

At S3, the convolution-based filtering adaptation algorithm is performed. The results of the luma components in two bufs stored in the above steps are sent to the CCA link, the coefficient is calculated, and the filtering operation is performed.

For the pixel point of one slice, the covariance is calculated according to the neighborhood information contained in the convolution template, the CCA filtering coefficient is calculated according to the covariance, and the filtering operation is performed according to the convolution template.

Only the chroma uses CCA, and the steps are as follows.

At S1, DBF filtering is performed on the reconstructed picture after LMCS, and the result after DBF filtering is stored in dbfoutBuf.

At S2, NN filtering is performed on the reconstructed picture after LMCS, and the result of NN filtering is stored in nnoutBuf.

At S3, the convolution-based filtering adaptation algorithm is performed. The results of the chroma components in two bufs stored in the above steps are sent to the CCA link, the coefficient is calculated, and the filtering operation is performed.

For the pixel point of one slice, the covariance is calculated according to the neighborhood information contained in the convolution template, the CCA filtering coefficient is calculated according to the covariance, and the filtering operation is performed according to the convolution template.

The cross components CCA mode considers that the luma generally contains more information than the chroma, so that the filtering coefficient of CCA may be calculated by using the luma, which includes the following operations.

At S1, DBF filtering is performed on the reconstructed picture after LMCS, and the result after DBF filtering is stored in dbfoutBuf.

At S2, NN filtering is performed on the reconstructed picture after LMCS, and the result of NN filtering is stored in nnoutBuf.

At S3, the convolution-based filtering adaptation algorithm is performed. The results in two bufs stored in the above steps are sent to the CCA link, the coefficient is calculated, and the filtering operation is performed.

For the pixel point of one slice, the covariance is calculated according to the neighborhood information contained in the convolution template, the CCA filtering coefficient is calculated according to the covariance, and a CCA output signal is constructed.

After the filtering coefficient is obtained by calculation, the filtering operation is performed by using the following formula:

$$\mathrm{NNout\_chroma'} = \mathrm{int}((\mathrm{NNout\_chroma_C} + w_0 * (\mathrm{DBFout\_luma_t} - \mathrm{NNout\_luma_C})$$

$$+ w_1 * (\mathrm{DBFout\_luma_l} - \mathrm{NNout\_luma_C}) + w_2 * (\mathrm{DBFout\_luma_c} - \mathrm{NNout\_luma_C})$$

$$+ w_3 * (\mathrm{DBFout\_luma_r} - \mathrm{NNout\_luma_C}) + w_4 * (\mathrm{DBFout\_luma_b} - \mathrm{NNout\_luma_C})$$

$$+ w_5 * (\mathrm{NNout\_luma_t} - \mathrm{NNout\_luma_C}) + w_6 * (\mathrm{NNout\_luma_l} - \mathrm{NNout\_luma_C})$$

$$+ w_7 * (\mathrm{NNout\_luma_r} - \mathrm{NNout\_luma_C})$$

$$+ w_8 * (\mathrm{NNout\_luma_b} - \mathrm{NNout\_luma_C})) >> \mathrm{BITS\_NUM} + 0.5)$$

Where DBFout_luma refers to the output of the luma component after DBF, NNout_luma refers to the output of the luma component after passing through the NN filter, $\mathrm{NNout\_chroma_C}$ refers to the output of the chroma component after passing through the NN filter, $w_i$ refers to the i-th filter coefficient, $w_0$ to $w_4$ are the filter coefficients for the output of DBF, and $w_5$ to $w_8$ are the filter coefficients for the output of NN.

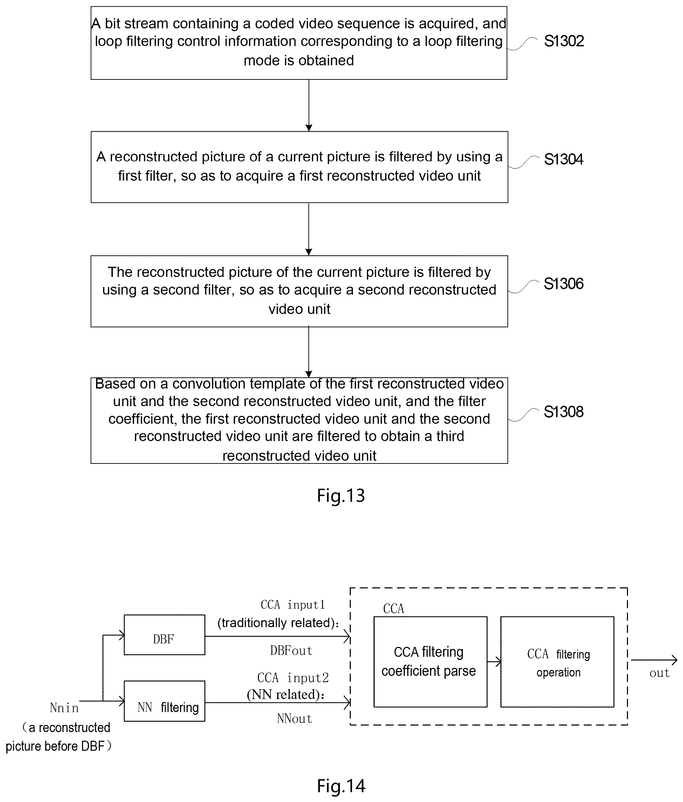

According to another embodiment of the present disclosure, a video decoding method is further provided. Fig. 13 is a flowchart of a video decoding method according to an embodiment of the present disclosure. As shown in Fig. 13, the flow includes the following steps.

At S1302, a bit stream containing a coded video sequence is acquired, and loop filtering control information corresponding to a loop filtering mode is obtained. The loop filtering control information includes a filter coefficient.

At S1304, a reconstructed picture of a current picture is filtered by using a first filter, so as to acquire a first reconstructed video unit.

In the present embodiment, the above S1304 may specifically include: performing DBF on the reconstructed picture; or performing SAO loop filtering on the reconstructed picture; or performing DBF and SAO loop filtering on the reconstructed picture; or performing LMCS processing on the reconstructed picture. S1304 is similar to the above S202.

At S1306, the reconstructed picture of the current picture is filtered by using a second filter, so as to acquire a second reconstructed video unit.

In the present embodiment, the above S1306 may specifically include: performing neural network loop filtering on the reconstructed picture to obtain the second reconstructed video unit; or performing neural network loop filtering on the reconstructed picture, and performing weighted summation on a neural network loop filtering result and the first reconstructed video unit, so as to obtain the second reconstructed video unit; or performing neural network loop filtering on the reconstructed picture, and scaling the neural network loop filtering result according to an original picture, so as to obtain the second reconstructed video unit; or performing other loop filtering except the neural network loop filtering on the reconstructed picture to obtain the second reconstructed video unit. The other loop filtering includes at least one of the following: DBF, SAO loop filtering, and LMCS. S1306 is similar to the above S204.

At S1308, based on a convolution template of the first reconstructed video unit and the second reconstructed video unit, and the filter coefficient, the first reconstructed video unit and the second reconstructed video unit are filtered to obtain a third reconstructed video unit.

Through the above S1302 to S1308, the problem in the related art of poor filtering modification caused a weighted merge operation for a single pixel point may be solved. During a filtering correction process, a convolution-based filtering mode may add more neighboring pixel information as much as possible, so that a reconstructed value better approaches an original value, thereby achieving better output picture quality.

In the present embodiment, the above S1308 may further specifically include: calculating, based on the first reconstructed video unit, a difference between a central pixel point and a neighborhood pixel point of the convolution template, and multiplying the difference by the filter coefficient of a corresponding position of the neighborhood pixel point to obtain a first result; at the same time, calculating, based on the second reconstructed video unit, the difference between the central pixel point and the neighborhood pixel point of the convolution template, and multiplying the difference by the filter coefficient of the corresponding position of the neighborhood pixel point to obtain a second result; and adding the first result, the second result, and the second reconstructed video unit, and then performing rounding processing to obtain the third reconstructed video unit. S1308 is similar to the above S208.

DBF filtering may be specifically performed in the above S1304, NN filtering may be specifically performed in the above S1306, CCA filtering may be specifically performed in the above S1308, and correspondingly, the third reconstructed video unit is a CCAF result. Filtering processing may be specifically performed in the following manner to obtain the third reconstructed video unit. The third reconstructed video unit is the following CCAF filtering result: $NNout' = int((NNout_C + w_0 * (DBFout_t - NNout_C) + w_1 * (DBFout_l - NNout_C) + w_2 * (DBFout_c - NNout_C) + w_3 * (DBFout_r - NNout_C) + w_4 * (DBFout_b - NNout_C) + w_5 * (NNout_t - NNout_C) + w_6 * (NNout_l - NNout_C) + w_7 * (NNout_, - NNout_C) + w_8 * (NNout_b - NNout_C)) >> BITS\_NUM + 0.5$, where $NNout'$ is the CCAF filtering result, DBFout is the first reconstructed video unit, NNout is the second reconstructed video unit, $w_i$ is the i-th filter coefficient, $w_0$ to $w_4$ are the filter coefficients of the first reconstructed video unit, and $w_5$ to $w_8$ are the filter coefficients of the second reconstructed video unit.

In the present embodiment, the above loop filtering information includes at least one of the following: a sequence-level filtering switch flag, configured to indicate that the loop filtering mode is turned on or turned off for a video sequence where a current video frame is located; a filtered picture-level flag, configured to indicate whether loop filtering model information appears in picture header information or in slice header information; and a loop filtering model structure information, configured to indicate that the loop filtering is performed on a video unit to which the loop filtering mode is applied.

In an embodiment, the method further includes: determining a value of the sequence-level filtering switch flag; and when the value of the sequence-level filtering switch flag is a first value, determining to enable the loop filtering for the current coded video sequence, and when the value of the sequence-level filtering switch flag is a second value, determining to not enable the loop filtering for the current coded video sequence. The first value is different from the second value.

In an embodiment, the method further includes: determining a value of the filtered picture-level flag; and when the value of the filtered picture-level flag is a third value, determining that the loop filtering model information appears in a picture header, and when the value of the filtered picture-level flag is a fourth value, determining that the loop filtering model information appears in a slice header. The third value is different from the fourth value.

In the present embodiment, the video unit includes a picture or a slice.

In the present embodiment, the loop filtering model structure information includes at least one of the following: a video unit filtering switch flag, configured to indicate that the loop filtering mode is turned on or turned off for the video unit; a video unit component switch flag, configured to indicate that the loop filtering mode is turned on or turned off for a video unit component; a video unit block level filtering switch flag, configured to indicate that the loop filtering mode is turned on or turned off at each level in the video unit; a video unit filtering coefficient absolute value, configured to indicate a filtering coefficient absolute value corresponding to each level in the video unit; and a video unit filtering coefficient sign, configured to indicate a filtering coefficient sign corresponding to each level in the video unit. The video unit component includes at least one of the following: a luma component of the video unit; a first chroma component of the video unit; and a second chroma component of the video unit.

In an embodiment, the method further includes: determining a value of the video unit filtering switch flag, and determining, according to the value, to enable the loop filtering or not enable the loop filtering for a current video unit.

In an embodiment, the method further includes: determining a value of a luma component switch flag of the video unit, and determining, according to the value, to enable the loop filtering for the luma component of the current video unit, or not enable the loop filtering for the luma component of the current video unit; determining a value of a first chroma component switch flag of the video unit, and determining, according to the value, to enable the loop filtering for the first chroma component of the current video unit, or not enable the loop filtering for the first chroma component of the current video unit; and determining a value of a second chroma component switch flag of the video unit, and determining, according to the value, to enable the loop filtering for the second chroma component of the current video unit, or not enable the loop filtering for the second chroma component of the current video unit.

In an embodiment, the method further includes: determining a value of the video unit block-level filtering switch flag, and determining, according to the value, to enable the loop filtering for a coding block in the video unit, or not enable the loop filtering for the coding block in the video unit.

In an embodiment, the method further includes: filtering the video unit with the loop filtering mode turned on by using the loop filtering mode according to the video unit filtering coefficient absolute value and the video unit filtering coefficient sign.

In the present embodiment, the loop filtering model structure information further includes: a video unit block-level filter coefficient merge mode switch flag, configured to indicate whether to enable a coefficient merge mode for the coding block in the video unit and a component of the coding block; and a video unit block-level filter coefficient merge mode type flag, configured to indicate a position of a neighboring coding block of the current coding block in the video unit, where the current coding block performs the loop filtering by using a filter coefficient of the neighboring coding block. A coding block component includes at least one of the following: a luma component, a first chroma component, and a second chroma component.

In the present embodiment, the loop filtering model structure information further includes: a cross-component filtering mode switch flag, configured to indicate whether to enable a cross-component filtering mode for the coding block in the video unit and the component of the coding block or not.

On the one hand, in the above S1306, the flag of the CCA filtering may be specifically acquired from pps_cca_enabled_flag of the video bitstream; it is determined whether to perform CCA filtering according to the flag of CCA filtering, where pps_cca_enabled_flag is 1 or 0, 1 indicates that CCA filtering is performed on the current slice, and 0 indicates that CCA filtering is not performed on the current slice; and in a case where pps_cca_enabled_flag is 1,the filter coefficient is acquired from the video bitstream; or in a case where pps_cca_enabled_flag is 1, it is determined whether CCA filtering is performed on each block of the reconstructed picture according to cca_block_flag of the video bitstream, where cca_block_flag is 1 or 0, 1 indicates that CCA filtering is performed on the current block, 0 indicates that CCA filtering is not performed on the current block, and if cca _block_flag is 1, and the filter coefficient of each block is acquired. The block is one of the following: one or more CTUs, one or more CUs, and a pixel block of a preset size.

On the other hand, in the above S1306, a position of the filter coefficient may also be specifically determined through pps_cca_info_in_ph_flag of the video bitstream, where pps_cca_info_in_ph_flag is 1 or 0, 1 indicates that the filter coefficient is in a picture header, and 0 indicates that the filter coefficient is in a slice header; in case where pps_cca_info_in_ph_flag is 1, the filter coefficient is acquired from the picture header; and in case where pps_cca_info_in_ph_flag is 0, the filter coefficient is acquired from the slice header.

In another embodiment, the above S1308 may specifically include: for the slice or block whose flag of CCA filtering is 1, acquiring a first sub-filtering result of the luma component and/or the chroma component in a first filtering result, and acquiring a second sub-filtering result of the luma component and/or the chroma component in a second filtering result; and performing CCA filtering processing on each slice or each block of the reconstructed picture according to the first sub-filtering result, the second sub-filtering result, and the filter coefficient, so as to obtain a CCA filtering result.

In another embodiment, the above S1308 may further specifically include: determining whether to perform CCA filtering on the luma component of the current slice according to cca_luma_enabled_flag of the video bitstream, if cca_luma_enabled_flag is 1, performing CCA filtering on the luma component of the current slice, and if cca_luma_enabled_flag is 0, not performing CCA filtering on the luma component of the current slice; determining whether to perform CCA filtering on a chroma Cb component of the current slice according to cca_cb_enabled_flag, if cca_cb_enabled_flag is 1, performing CCA filtering on the chroma Cb component of the current slice, and if cca_cb_enabled_flag is 0, not performing CCA filtering on the chroma Cb component of the current slice; determining whether to perform CCA filtering on a chroma Cr component of the current slice according to cca_cr_enabled_flag, if cca_cr_enabled_flag is 1, performing CCA filtering on the chroma Cr component of the current slice, and if cca_cr_enabled_flag is 0, not performing CCA filtering on the chroma Cr component of the current slice; or determining whether to perform CCA filtering on the luma component or the chroma component of the current block according to cca_block_flag[i]; and if cca_block_flag[i] is 1, performing CCA filtering on the luma component or the chroma component of the current block, and if cca_block_flag[i] is 0, not performing CCA filtering on the luma component or the chroma component of the current block, where i of 0 indicates the luma component, i of 1 indicates the chroma Cb component, and i of 2 indicates the chroma Cr component.

In another embodiment, the above S308 may specifically include: in a case where the flag of CCA filtering is 1, determining whether to perform CCA filtering on the current block through cca_block_flag of the video bitstream, if cca_block_flag is 1, performing CCA filtering on the current block, and if cca_block_flag is 0, not performing CCA filtering on the current block; in a case where cca_block_flag is 1, determining whether the current block uses the coefficient merge mode through cca_block_merge_flag[i][Blk AddrX][Blk AddrY], if cca_block_merge_flag[i][Blk AddrX][Blk AddrY] is 1, determining that the coefficient merge mode is used, and if cca_block_merge_flag[i][Blk AddrX][BlkAddrY] is 0, determining that the coefficient merge mode is not used; and in a case where cca_block_merge_flag[i][Blk AddrX][Blk AddrY] is 1, determining the type of the coefficient merge mode of the current block through cca_block_merge_flag[0][Blk AddrX][Blk AddrY], if cca_block_merge_flag[0][Blk AddrX][Blk AddrY] is 1, performing CCA filtering on the current block by using the filter coefficient of the upper neighboring block, and if cca_block_merge_flag[0][Blk AddrX][Blk AddrY] is 0, performing CCA filtering on the current block by using the filter coefficient of the left neighboring block, where i of 0 indicates the luma component, i of 1 indicates the chroma Cb component, and i of 2 indicates the chroma Cr component.

In the present embodiment, the convolution template is a 3*3 diamond-shaped template, a 5*5 diamond-shaped template, a 7*7 diamond-shaped template, a 3*3 square template, a 5*5 square template, a 7*7 square template, and a 5*5 cross template, which are only a few commonly used ones listed herein, and are not limited to the scope of protection of the present embodiment.

In the present embodiment, a convolution-based filtering adaptation algorithm at a decoding end is provided, and the overall flow of a CCA filtering method at the coding end is as follows.

At S1, DBF filtering is performed on the reconstructed picture after LMCS, and a result after DBF filtering is stored in dbfoutBuf.

At S2, NN filtering is performed on the reconstructed picture after LMCS, and a result of NN filtering is stored in nnoutBuf.

At S3, the convolution-based filtering adaptation algorithm is performed. The results in two bufs stored in the above steps are sent to a CCA link, a CCA coefficient is parsed from the bitstream, and a filtering operation is performed.

At S3-a, a decoder reads the filter coefficient according to syntax elements in the bitstream.

At S3-b, an output after CCA filtering is reconstructed, which is similar to the operation mode of S3-c of Embodiment 1.

Fig. 14 is a schematic diagram of a convolution-based filter adaptation operation at a decoding end according to an embodiment. As shown in Fig. 14, at the decoding end, the convolution-based filtering adaptation algorithm, the filter coefficient, and other contents are obtained by parsing the bitstream. CCAF at the decoding end includes the following operations.

At S1, DBF filtering is performed, namely, DBF filtering is performed on a reconstructed picture Rec after LMCS, and the result of DBF filtering is stored in dbfoutBuf.

At S2: NN filtering is performed, namely, NN filtering is performed after the reconstructed picture of LMCS is obtained.

First, various data that need to be input into the network are configured, for example, a reconstructed picture sample, QP information, CU division information, deblocking filtering information, a prediction sample, etc., and then the information is input into a network module to obtain a reconstructed picture sample after NN processing. The result of NN filtering is stored in nnoutBuf.

At S3, the convolution-based filtering adaptation algorithm is performed, the results in two bufs stored in the above steps are sent to the CCA link, the CCA coefficient is parsed from the bitstream, and the filtering operation is performed. The specific steps are as follows.

At S3-a, the filtering coefficient is calculated, and $w_0$ to $w_8$ are parsed from the bitstream.

At S3-b, after a CCA output signal is constructed to obtain the filtering coefficient, the filtering operation is performed by using the following formula:

$$\mathrm{NNout}' = \mathrm{int}((\mathrm{NNout}_C + w_0 * (\mathrm{DBFout}_t - \mathrm{NNout}_C) + w_1 * (\mathrm{DBFout}_l - \mathrm{NNout}_C)$$

$$+ w_2 * (\mathrm{DBFout}_c - \mathrm{NNout}_C) + w_3 * (\mathrm{DBFout}_r - \mathrm{NNout}_C) + w_4 * (\mathrm{DBFout}_b - \mathrm{NNout}_C)$$

$$+ w_5 * (\mathrm{NNout}_t - \mathrm{NNout}_C) + w_6 * (\mathrm{NNout}_l - \mathrm{NNout}_C) + w_7 * (\mathrm{NNout}_r - \mathrm{NNout}_C)$$

$$+ w_8 * (\mathrm{NNout}_b - \mathrm{NNout}_C)) >> \mathrm{BITS\_NUM} + 0.5)$$

Where DBFout refers to the output after DBF, NNout refers to the output after passing through an NN filter, $w_i$ refers to the i-th filter coefficient, $w_0$ to $w_4$ are the filter coefficients for the output of DBF, and $w_5$ to $w_8$ are the filter coefficients for the output of NN.

In the present embodiment, the operation that the convolution-based filtering adaptation algorithm transmits the syntax elements related to CCA in the video coding bitstream includes the following operations.

Sequence Parameter Set (SPS) layer:

A coder determines whether the current sequence adopts a CCA solution according to the syntax elements of sps_cca_enabled_flag in the SPS. The syntax semantics are shown in Table 1 below.

Table 1

| seq_parameter_set_rbsp( ) { | Descriptor |
|---|---|
| ...... | |
| sps_sao_enabled_flag | u(1) |
| sps_cca_enabled_flag | u(1) |
| sps_alf_enabled_flag | u(1) |
| if( sps_alf_enabled_flag &&sps_chroma_format_idc != 0) | |

(continued)

| | |
|---|---|
| sps_ccalf_enabled_flag | u(1) |
| ...... | u(1) |
| } | |

When sps_cca_enabled_flag is equal to 1, it indicates that a CCA technology is enabled in the current sequence, and when sps_cca_enabled_flag is 0, it indicates that the CCA technology is not enabled in the current sequence.

Picture Parameter Set (PPS) layer:

The coder determines positions of related information of the CCA solution in the syntax elements according to the syntax elements of pps_cca_info_in_ph_flag in the PPS. The syntax semantics are shown in Table 2 below.

Table 2

| pic_parameter_set_rbsp( ) { | Descriptor |
|---|---|
| ...... | |
| if( !pps_no_pic_partition_flag ) { | |
| pps_rpl_info_in_ph_flag | u(1) |
| pps_sao_info_in_ph_flag | u(1) |
| pps_cca_info_in_ph_flag | u(1) |
| pps_alf_info_in_ph_flag | u(1) |
| if( ( pps_weighted_pred_flag \|\| pps_weighted_bipred_flag ) && pps_rpl_info_in_ph_flag ) | |
| pps_wp_info_in_ph_flag | u(1) |
| pps_qp_delta_info_in_ph_flag | u(1) |
| } | |
| ...... | |
| } | |

When pps_cca_info_in_ph_flag is equal to 1, it indicates that CCA related information appears in the picture header, and when pps_cca_info_in_ph_flag is equal to 0, it indicates that CCA related information does not appear in the picture header but may appear in the slice header.

Picture header:

When pps_cca_info_in_ph_flag is equal to 1, it indicates that the CCA related information appears in the picture header. The decoder may read the CCA filtering coefficient according to a cca_structure() structure in the picture header. The syntax semantics are shown in Table 3 below.

Table 3

| picture_header_structure( ) { | Descriptor |
|---|---|
| ...... | |
| ph_gdr_or_irap_pic_flag | u(1) |
| if( sps_cca_enabled_flag && pps_cca _info_in_ph_flag ) { | |
| cca_structure () | |
| } | |
| ...... | |

(continued)

| | |
|---|---|
| } | |

Slice header:

When pps_cca_info_in_ph_flag is equal to 0, it indicates that the CCA related information does not appear in the picture header but may appear in the slice header. The decoder may read the CCA filtering coefficient according to a cca_structure() structure in the slice header. The syntax semantics are shown in Table 4 below.

Table 4

| slice_header( ) { | Descriptor |
|---|---|
| ...... | u(1) |
| if( sps_cca _enabled_flag && !pps_cca_info_in_ph_flag ) { | |
| cca_structure () | |
| } | |
| if( ph_lmcs_enabled_flag && !sh_picture_header_in_slice_header_flag ) | |
| sh_lmcs_used_flag | u(1) |
| ...... | |
| } | |

cca_structure():

The decoder determines whether the current picture or slice uses CCA according to the syntax elements in the cca_structure() structure. If CCA is used, the filtering coefficient of the luma component or the chroma component is further acquired to complete the CCA operation, as shown in Table 5 below.

Table 5

| cca_structure( ){ | Descriptor |
|---|---|
| cca_enabled_flag | u(1) |
| if(cca_enabled_flag ) { | |
| cca_luma_enabled_flag | u(1) |
| if(cca_luma_enabled_flag){ | |
| for( i = 0; i < num_cca_luma_coeff; i++ ){ | |
| cca_luma_coeff_abs[ i ] | u(7)/ ue(v) |
| cca_luma_coeff_signed [ i ] | u(1) |
| } | |
| } | |
| if( sps_chroma_format_idc != 0 ) { | |
| cca_cb_enabled_flag | u(1) |
| cca_cr_enabled_flag | u(1) |
| } | |
| if( cca_cb_enabled_flag \|\| cca_cr_enabled_flag ){ | |
| for( i = 0; i < num_cca_chroma_coeff; i++ ) { | |
| cca_ cb_coeff_abs[ i ] | u(7)/ ue(v) |

(continued)

| | |
|---|---|
| cca_ cb_coeff_signed[ i ] | u(1) |
| cca_ cr_coeff_abs[ i ] | u(7)/ ue(v) |
| cca_ cr_coeff_signed[ i ] | u(1) |
| } | |
| } | |
| } | |
| } | |

When cca_enabled_flag is equal to 1, it indicates that CCA is used, and when cca_enabled_flag is equal to 0, it indicates that CCA is not used.

When cca_luma_enabled_flag is equal to 1, it indicates that the luma component of the current slice uses CCA, and when cca_luma_enabled_flag is equal to 0, it indicates that the luma component of the current slice does not use CCA.

num_cca_luma_coeff is the number of luma filter coefficients, which is usually a preset value and does not need to be transmitted. Different embodiments may use different numbers of filters.

cca_luma_coeff_abs[i] indicates the i-th coefficient absolute value of the luma of the current slice.

cca_luma_coeff_signed[i] indicates the i-th coefficient sign of the luma of the current slice.

When cca_cb_enabled_flag is equal to 1, it indicates that the Cb component of the current slice uses CCA, and when cca_cb_enabled_flag is equal to 0, it indicates that the Cb component of the current slice does not use CCA.

When cca_cr_enabled_flag is equal to 1, it indicates that the Cr component of the current slice uses CCA, and when cca_cr_enabled_flag is equal to 0, it indicates that the Cr component of the current slice does not use CCA.

cca_cb_coeff_abs[i] indicates the i-th coefficient absolute value of the Cb component of the current slice.

cca_cb_coeff_signed[i] indicates the i-th coefficient sign of the Cb component of the current slice.

cca_cr_coeff_abs[i] indicates the i-th coefficient absolute value of the Cr component of the current slice.

cca_cr_coeff_signed[i] indicates the i-th coefficient sign of the Cr component of the current slice.

num_cca_chroma_coeff is the number of chroma filter coefficients, which is usually a preset value and does not need to be transmitted. Different embodiments may use different numbers of filters.

The syntax structure used only for the luma component is shown in Table 6 below.

Table 6

| cca_structure( ){ | Descriptor |
|---|---|
| cca_enabled_flag | u(1) |
| if(cca_enabled_flag ) { | |
| cca_luma_enabled_flag | u(1) |
| if(cca_luma_enabled_flag){ | |
| for( i = 0; i < num_cca_luma_coeff; i++ ){ | |
| cca_luma_coeff_abs[ i ] | u(7)/ ue(v) |
| cca_luma_coeff_signed [ i ] | u(1) |
| } | |
| } | |
| } | |
| } | |

The syntax structure used only for the chroma component is shown in Table 7 below.

Table 7

| cca_structure( ){ | Descriptor |
|---|---|
| cca_enabled_flag | u(1) |

(continued)

| | |
|---|---|
| if(cca_enabled_flag ) { | |
| if( sps_chroma_format_idc != 0 ) { | |
| cca_cb_enabled_flag | u(1) |
| cca_cr_enabled_flag | u(1) |
| } | |
| if( cca_cb_enabled_flag \|\| cca_cr_enabled_flag ){ | |
| for( i = 0; i < num_cca_chroma_coeff; i++ ) { | |
| cca_cb_coeff_abs[ i ] | u(7)/ ue(v) |
| cca_cb_coeff_signed[ i ] | u(1) |
| cca_cr_coeff_abs[ i ] | u(7)/ ue(v) |
| cca_cr_coeff_signed[ i ] | u(1) |
| } | |
| } | |
| } | |
| } | |

Block-level switch:

If a block-level switch is set for the CCA operation to control a CCA switch operation of each block, the decoder also needs to parse the block-level switch, as shown in Table 8 below.

Table 8

| coding_tree_unit( ) { | Descriptor |
|---|---|
| ...... | |
| if( sh_sao_luma_used_flag \|\| sh_sao_chroma_used_flag ) | |
| sao( CtbAddrX, CtbAddrY ) | |
| if( cca_enabled_flag) | |
| cca_block_flag[ 0 ][ Blk AddrX ][ Blk AddrY ] | ae(v) |
| if( cca_cb_enabled_flag) | |
| cca_ block_flag[ 1 ][ BlkAddrX ][ Blk AddrY ] | ae(v) |
| if( cca_cr_enabled_flag ) | |
| cca_ block_flag[ 2 ][ Blk AddrX ][ Blk AddrY ] | ae(v) |
| ...... | |
| } | |

cca_block_flag[i] identifies whether the block uses CCA, with 1 indicating used and 0 indicating unused. Herein, i of 0 indicates the luma component, i of 1 indicates the Cb component, and i of 2 indicates the Cr component.

Block-level CCA coefficient transmission:

If CCA is performed at the block level, then the CCA coefficient needs to be transmitted at the block level.
The luma is shown in Table 9 below.

Table 9

| coding_tree_unit( ) { | Descriptor |
|---|---|
| ...... | |
| if( sh_sao_luma_used_flag \|\| sh_sao_chroma_used_flag ) | |
| sao( CtbAddrX, CtbAddrY ) | |
| if( cca_enabled_flag){ | |
| cca_block_flag[0][ Blk AddrX ][ Blk AddrY ] | ae(v) |
| if(cca_block_flag[0][ Blk AddrX ][ Blk AddrY ]) { | |
| for( i = 0; i <num_cca_luma_coeff; i++ ){ | |
| cca_luma_coeff_abs[ Blk AddrX ][ Blk AddrY ] [ i ] | u(7)/ ue(v) |
| cca_luma_coeff_signed [ Blk AddrX ][ Blk AddrY ] [ i ] | u(1) |
| } | |
| } | |
| } | |
| ...... | |
| } | |

The chroma is shown in Table 10 below.

Table 10

| coding_tree_unit( ) { | Descriptor |
|---|---|
| ...... | |
| if( sh_sao_luma_used_flag \|\| sh_sao_chroma_used_flag ) | |
| sao( CtbAddrX, CtbAddrY ) | |
| if( cca_cb_enabled_flag){ | |
| cca_block_flag[1][ Blk AddrX ][ Blk AddrY ] | ae(v) |
| if(cca_block_flag[1][ Blk AddrX ][ Blk AddrY ]) { | |
| for( i = 0; i <num_cca_luma_coeff; i++ ){ | |
| cca_cb_coeff_abs[ i ] | u(7)/ ue(v) |
| cca_cb_coeff_signed[ i ] | u(1) |
| } | |
| } | |
| } | |
| if( cca_cr_enabled_flag) | |
| cca_block_flag[2 ][ Blk AddrX ][ Blk AddrY ] | ae(v) |
| if(cca_block_flag[ 2 ][ Blk AddrX ][ Blk AddrY ]) { | |
| for( i = 0; i <num_cca_chroma'_coeff; i++ ){ | |
| cca_ cr_coeff_abs[ i ] | u(7)/ ue(v) |
| cca_cr_coeff_signed [ i ] | u(1) |
| } | |
| } | |
| ...... | |

(continued)

| | |
|---|---|
| } | |

Coefficient merge mode:

If the block-level coefficient can be merged with the upper and left neighboring blocks, a merge switch needs to be transmitted.

The luma is shown in Table 11 below.

Table 11

| coding_tree_unit( ) { | Descriptor |
|---|---|
| ...... | |
| if( sh_sao_luma_used_flag \|\| sh_sao_chroma_used_flag ) | |
| sao( CtbAddrX, CtbAddrY ) | |
| if( cca_enabled_flag){ | |
| cca_block_flag[0][ Blk AddrX ][ Blk AddrY ] | ae(v) |
| if(cca_block_flag[0][ Blk AddrX ][ Blk AddrY ]){ | |
| cca_block_merge_flag[0][ Blk AddrX ][ Blk AddrY ] | ae(v) |
| if(cca_block_merge_flag[0][ Blk AddrX ][ Blk AddrY ]) | |
| cca_block_merge_top_flag[0][ Blk AddrX ][ Blk AddrY ] | ae(v) |
| else{ | |
| for( i = 0; i <num_cca_luma_coeff; i++ ){ | |
| cca_luma_coeff_abs[ Blk AddrX ][ Blk AddrY ] [ i ] | u(7)/ ue(v) |
| cca_luma_coeff_signed [ Blk AddrX ][ Blk AddrY ] [ i ] | u(1) |
| } | |
| } | |
| } | |
| ...... | |
| } | |

cca_block_merge_flag[i][Blk AddrX][Blk AddrY] identifies whether the block uses the merge mode of CCA, with 1 indicating used and 0 indicating unused. Herein, i of 0 indicates the luma component, i of 1 indicates the Cb component, and i of 0 indicates the Cr component.

cca_block_merge_mode_flag[0][BlkAddrX][BlkAddrY] identifies the type of the merge mode of CCA of the block, with 1 indicating that the CCA coefficient of the upper neighboring block is used, and 0 indicating that the CCA coefficient of the left neighboring block is used. Herein, i of 0 indicates the luma component, i of 1 indicates the Cb component, and i of 0 indicates the Cr component.

The chroma is shown in Table 12 below.

Table 12

| coding_tree_unit( ) { | Descriptor |
|---|---|
| ...... | |
| if( sh_sao_luma_used_flag \|\| sh_sao_chroma_used_flag ) | |
| sao( CtbAddrX, CtbAddrY ) | |
| if( cca_cb_enabled_flag){ | |
| cca_block_flag[1][ Blk AddrX ][ Blk AddrY ] | ae(v) |

(continued)

| | |
|---|---|
| if(cca_block_flag[1][ BlkAddrX ][ BlkAddrY ]){ | |
| cca_block_merge_flag[1][ Blk AddrX ][ Blk AddrY ] | ae(v) |
| if(cca_block_merge_flag[1][ Blk AddrX ][ Blk AddrY ]) | |
| cca_block_merge_top_flag[1][ Blk AddrX ][ Blk AddrY ] | ae(v) |
| else{ | |
| for( i = 0; i <num_cca_chroma_coeff; i++ ){ | |
| cca_cb_coeff_abs[ Blk AddrX ][ Blk AddrY ] [ i ] | u(7)/ue(v) |
| cca_cb_coeff_signed [ Blk AddrX ][ Blk AddrY ] [ i ] | u(1) |
| } | |
| } | |
| } | |
| if( cca_cr_enabled_flag){ | |
| cca_block_flag[2][ Blk AddrX ][ Blk AddrY ] | ae(v) |
| if(cca_block_flag[2][ BlkAddrX ][ Blk AddrY ]){ | |
| cca_block_merge_flag[2][ Blk AddrX ][ Blk AddrY ] | ae(v) |
| if(cca_block_merge_flag[2][ Blk AddrX ][ Blk AddrY ]) | |
| cca_block_merge_top_flag[2][ Blk AddrX ][ Blk AddrY ] | ae(v) |
| else{ | |
| for( i = 0; i <num_cca_chroma_coeff; i++ ){ | |
| cca_cr_coeff_abs[ Blk AddrX ][ Blk AddrY ] [ i ] | u(7)/ ue(v) |
| cca_cr_coeff_signed [ Blk AddrX ][ Blk AddrY ] [i] | u(1) |
| } | |
| } | |
| } | |
| ...... | |
| } | |

A Cross Components CCA mode is shown in Table 13 below.

Table 13

| coding_tree_unit( ) { | Descriptor |
|---|---|
| ...... | |
| if( sh_sao_luma_used_flag \|\| sh_sao_chroma_used_flag ) | |
| sao( CtbAddrX, CtbAddrY ) | |
| if( cca_cb_enabled_flag){ | |
| cca_block_flag[1][ Blk AddrX ][ Blk AddrY ] | ae(v) |
| f(cca_block_flag[1][ BlkAddrX ][ Blk AddrY ]) { | |
| for( i = 0; i <num_cca_luma_coeff; i++ ){ | |
| cca_cb_coeff_abs[ i ] | u(7)/ ue(v) |
| ca_cb_coeff_signed[ i ] | u(1) |
| } | |

(continued)

| | |
|---|---|
| } | |
| } | |
| if( cca_cr_enabled_flag) | |
| cca_block_flag[2 ] [ Blk AddrX ][ Blk AddrY ] | ae(v) |
| if(cca_block_flag[ 2 ][ Blk AddrX ][ Blk AddrY ]) { | |
| for( i = 0; i <num_cca_chroma'_coeff; i++ ){ | |
| cca_cr_coeff_abs[ i ] | u(7)/ ue(v) |
| cca_cr_coeff_signed [ i ] | u(1) |
| } | |
| } | |
| ...... | |
| } | |
| cc_cca_structure() | |

Calling positions of cc_cca_structure() and cca_structure() are the same, as shown in Table 14 below.

Table 14

| cc_cca_structure( ){ | Descriptor |
|---|---|
| cc_cca_enabled_flag | u(1) |
| if(cc_cca_enabled_flag ) { | |
| if( sps_chroma_format_idc != 0 ) { | |
| cc_cca_cb_enabled_flag | u(1) |
| cc_cca_cr_enabled_flag | u(1) |
| } | |
| if( cc_cca_cb_enabled_flag \|\| cc_cca_cr_enabled_flag ){ | |
| for( i = 0; i < num_cc_cca_chroma_coeff; i++ ) { | |
| cc_cca_cb_coeff_abs[ i ] | u(7)/ ue(v) |
| cc_cca_cb_coeff_signed[ i ] | u(1) |
| cc_cca_cr_coeff_abs[ i ] | u(7)/ ue(v) |
| cc_cca_cr_coeff_signed [ i ] | u(1) |
| } | |
| } | |
| } | |
| } | |

When cc_cca_enabled_flag is equal to 1, it indicates that CC-CCA is used, and when cc_cca_enabled_flag is equal to 0, it indicates that CC-CCA is not used. When the syntax element does not exist, it indicates that cca_enabled_flag is equal to 0.

When cc_cca_cb_enabled_flag is equal to 1, it indicates that the Cb component of the current slice uses CC-CCA, and when cc_cca_cb_enabled_flag is equal to 0, it indicates that the Cb component of the current slice does not use CC-CCA.

When cc_cca_cr_enabled_flag is equal to 1, it indicates that the Cr component of the current slice uses CC-CCA, and when cc_cca_cr_enabled_flag is equal to 0, it indicates that the Cr component of the current slice does not use CC-CCA.

cc_cca_cb_coeff_abs[i] indicates the i-th coefficient absolute value of the Cb component of the current slice.

cc_cca_cb_coeff_signed[i] indicates the i-th coefficient sign of the Cb component of the current slice.

cc_cca_cr_coeff_abs[i] indicates the i-th coefficient absolute value of the Cr component of the current slice.

cc_cca_cr_coeff_signed[i] indicates the i-th coefficient sign of the Cr component of the current slice.

num_cc_cca_chroma_coeff is the number of chroma filter coefficients, which is usually a preset value and does not need to be transmitted. Different embodiments may use different numbers of filters.

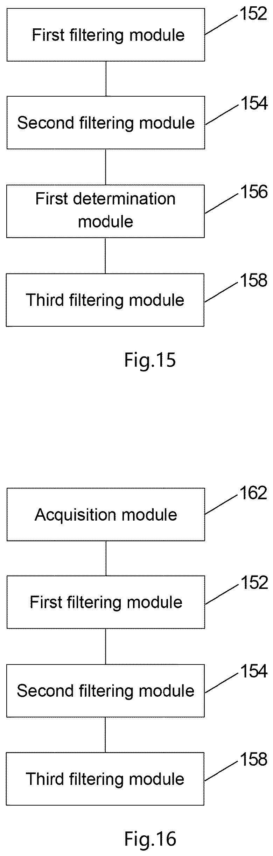

According to another aspect of the embodiments of the present disclosure, a video coding and decoding loop filtering apparatus is further provided. Fig. 15 is a block diagram of a loop filtering apparatus according to an embodiment of the present disclosure. As shown in Fig. 15, the apparatus includes: a first filtering module 152, a second filtering module 154, a first determination module 156, and a third filtering module 158.

The first filtering module 152 is configured to filter a reconstructed picture of a current picture by using a first filter, so as to obtain a first reconstructed video unit. The second filtering module 154 is configured to filter the reconstructed picture of the current picture by using a second filter, so as to obtain a second reconstructed video unit. The first determination module 156 is configured to determine a filter coefficient according neighborhood information contained in a convolution template of the first reconstructed video unit and the second reconstructed video unit. The neighborhood information is information of neighboring pixel points around a pixel point in the convolution template. The third filtering module 158 is configured to filter, based on the convolution template and the filter coefficient, the first reconstructed video unit and the second reconstructed video unit to obtain a third reconstructed video unit.

In an embodiment, the first determination module 156 is further configured to determine, for each pixel point in a video unit of the reconstructed picture and a video unit of an original picture, a difference between the pixel point at each neighborhood position in the convolution template and each pixel point, multiply the differences respectively to obtain a first pixel product, and determine a difference between the pixel point of the video unit of the original picture and the pixel point of the video unit of the reconstructed picture to obtain a covariance; and determine, based on a Wiener filtering method, the filter coefficient according to the covariance.

In an embodiment, the video unit of the reconstructed picture includes a reconstructed picture, or a slice, or a coding block, or a coding tree block.

In an embodiment, the third filtering module 158 is further configured to perform at least one of the following operations: based on the convolution template, filtering processing is performed on a luma component of the first reconstructed video unit and the second reconstructed video unit according to the filter coefficient; based on the convolution template, filtering processing is performed on a first chroma component of the first reconstructed video unit and the second reconstructed video unit according to the filter coefficient; based on the convolution template, filtering processing is performed on a second chroma component of the first reconstructed video unit and the second reconstructed video unit according to the filter coefficient.

In an embodiment, the first filtering module 152 is further configured to perform DBF on the reconstructed picture; or perform SAO loop filtering on the reconstructed picture; or perform DBF and SAO loop filtering on the reconstructed picture; or perform LMCS processing on the reconstructed picture.

In an embodiment, the second filtering module 154 is further configured to perform neural network loop filtering on the reconstructed picture to obtain the second reconstructed video unit; or perform neural network loop filtering on the reconstructed picture, and perform weighted summation on a neural network loop filtering result and the first reconstructed video unit, so as to obtain the second reconstructed video unit; or perform neural network loop filtering on the reconstructed picture, and scale the neural network loop filtering result according to the original picture, so as to obtain the second reconstructed video unit; or perform other loop filtering except the neural network loop filtering on the reconstructed picture to obtain the second reconstructed video unit. The other loop filtering includes at least one of the following: DBF, SAO loop filtering, and LMCS.

In an embodiment, the apparatus further includes: a second determination module and a CCA filtering module. The second determination module is configured to determine a first loss between a pixel of the video unit of the reconstructed picture and a pixel of the original picture after filtering according to the first reconstructed video unit, the second reconstructed video unit, and the filter coefficient; and determine a second loss between the pixel of the video unit of the reconstructed picture and the pixel of the original picture before filtering according to the first reconstructed video unit, the second reconstructed video unit, and the filter coefficient. The CCA filtering module is configured to determine whether to perform CCA filtering on the video unit of the current picture according to the first loss and the second loss.

In an embodiment, the apparatus further includes: a third determination module and a fourth filtering module. The third determination module is configured to determine the first loss between the pixel of the video unit of the reconstructed picture and the pixel of the original picture after filtering according to the first reconstructed video unit, the second reconstructed video unit, and the filter coefficient; and filter through a preset filter coefficient, and determine a third loss between the pixel of the video unit of the reconstructed picture and the pixel of the original picture after filtering according to the first reconstructed video unit, the second reconstructed video unit, and the filter coefficient. The fourth filtering module is configured to determine, according to the first loss and the third loss, to perform filtering processing through the filter coefficient, or perform filtering processing through the preset filter coefficient.

In an embodiment, the apparatus further includes: a fourth determination module and a fifth filtering module. The fourth determination module is configured to determine the first loss between the pixel of the video unit of the reconstructed picture and the pixel of the original picture after filtering according to the first reconstructed video unit, the second reconstructed video unit, and the filter coefficient; determine the second loss between the pixel of the video unit of the reconstructed picture and the pixel of the original picture before filtering according to the first reconstructed video unit, the second reconstructed video unit, and the filter coefficient; and filter the video unit of the current picture according to the filter coefficient of the neighboring video unit of the video unit of the current picture, and determine a fourth loss between the pixel of the video unit of the reconstructed picture and the pixel of the original picture after filtering. The fifth filtering module is configured to determine, according to the first loss, the second loss, and fourth loss, the filter coefficient used by the video unit of the current picture, and filter according to the determined filter coefficient.

In an embodiment, the apparatus further includes: a fifth determination module and a confirmation module. The fifth determination module is configured to determine the first loss between the pixel of the video unit of the reconstructed picture and the pixel of the original picture after filtering according to the first reconstructed video unit, the second reconstructed video unit, and the filter coefficient; and determine the second loss between the pixel of the video unit of the reconstructed picture and the pixel of the original picture before filtering according to the first reconstructed video unit, the second reconstructed video unit, and the filter coefficient. The confirmation module is configured to determine whether to filter the video unit module of the current picture according to the first loss and the second loss, recalculate the filter coefficient for the video unit with filtering turned on, again determine whether to filter according to the first loss and the second loss, and confirm whether to filter the video unit of the current picture after repeating N times.

In an embodiment, the third filtering module 158 is further configured to calculate, based on the first reconstructed video unit, a difference between a central pixel point and a neighborhood pixel point of the convolution template, and multiply the difference by the filter coefficient of a corresponding position of the neighborhood pixel point to obtain a first result; at the same time, calculate, based on the second reconstructed video unit, the difference between the central pixel point and the neighborhood pixel point of the convolution template, and multiply the difference by the filter coefficient of the corresponding position of the neighborhood pixel point to obtain a second result; and add the first result, the second result, and the second reconstructed video unit, and then perform rounding processing to obtain the third reconstructed video unit.

In an embodiment, the convolution template in the present embodiment includes one of the following: a diamond-shaped template, a square template, and a cross template.

According to another aspect of the embodiments of the present disclosure, a video decoding apparatus is further provided. Fig. 16 is a block diagram of a video decoding apparatus according to an embodiment of the present disclosure. As shown in Fig. 16, the apparatus includes: an acquisition module 162, a first filtering module 152, a second filtering module 154, and a third filtering module 158. The acquisition module 162 is configured to acquire a bit stream containing a coded video sequence, and obtain loop filtering control information corresponding to a loop filtering mode. The first filtering module 152 is configured to filter a reconstructed picture of a current picture by using a first filter, so as to acquire a first reconstructed video unit. The second filtering module 154 is configured to filter the reconstructed picture of the current picture by using a second filter, so as to acquire a second reconstructed video unit. The third filtering module 158 is configured to filter, based on a convolution template of the first reconstructed video unit and the second reconstructed video unit, and a filter coefficient, the first reconstructed video unit and the second reconstructed video unit to obtain a third reconstructed video unit.

In an embodiment, the first filtering module 152 is further configured to perform DBF on the reconstructed picture; or perform SAO loop filtering on the reconstructed picture; or perform DBF and SAO loop filtering on the reconstructed picture; or perform LMCS processing on the reconstructed picture.

In an embodiment, the second filtering module 154 is further configured to perform neural network loop filtering on the reconstructed picture to obtain the second reconstructed video unit; or perform neural network loop filtering on the reconstructed picture, and perform weighted summation on a neural network loop filtering result and the first reconstructed video unit, so as to obtain the second reconstructed video unit; or perform neural network loop filtering on the reconstructed picture, and perform strength adjustment on the neural network loop filtering result according to an original picture, so as to obtain the second reconstructed video unit; or perform other loop filtering except the neural network loop filtering on the reconstructed picture to obtain the second reconstructed video unit. The other loop filtering includes at least one of the following: DBF, SAO loop filtering, and LMCS.

In an embodiment, the third filtering module 158 is further configured to calculate, based on the first reconstructed video unit, a difference between a central pixel point and a neighborhood pixel point of the convolution template, and multiply the difference by the filter coefficient of a corresponding position of the neighborhood pixel point to obtain a first result; at the same time, calculate, based on the second reconstructed video unit, the difference between the central pixel point and the neighborhood pixel point of the convolution template, and multiply the difference by the filter coefficient of the corresponding position of the neighborhood pixel point to obtain a second result; and add the first result, the second result, and the second reconstructed video unit, and then perform rounding processing to obtain the third reconstructed video unit.

In an embodiment, the loop filtering information includes at least one of the following: a sequence-level filtering switch flag, configured to indicate that the loop filtering mode is turned on or turned off for a video sequence where a current video frame is located; a filtered picture-level flag, configured to indicate whether loop filtering model information appears in picture header information or in slice header information; and loop filtering model structure information, configured to indicate that loop filtering is performed on a video unit to which the loop filtering mode is applied.

In an embodiment, the apparatus further includes a sixth determination module. The sixth determination module is configured to determine a value of the sequence-level filtering switch flag; and determine, when the value of the sequence-level filtering switch flag is a first value, to enable the loop filtering for the current coded video sequence, and determine, when the value of the sequence-level filtering switch flag is a second value, to not enable the loop filtering for the current coded video sequence. The first value is different from the second value.

In an embodiment, the apparatus further includes a seventh determination module. The seventh determination module is configured to determine a value of the filtered picture-level flag; and determine, when the value of the filtered picture-level flag is a third value, that the loop filtering model information appears in a picture header, and determine, when the value of the filtered picture-level flag is a fourth value, that the loop filtering model information appears in a slice header. The third value is different from the fourth value.

In an embodiment, the video unit includes a picture or a slice.

In an embodiment, the loop filtering model structure information includes at least one of the following: a video unit filtering switch flag, configured to indicate that the loop filtering mode is turned on or turned off for the video unit; a video unit component switch flag, configured to indicate that the loop filtering mode is turned on or turned off for a video unit component; a video unit block level filtering switch flag, configured to indicate that the loop filtering mode is turned on or turned off at each level in the video unit; a video unit filtering coefficient absolute value, configured to indicate a filtering coefficient absolute value corresponding to each level in the video unit; and a video unit filtering coefficient sign, configured to indicate a filtering coefficient sign corresponding to each level in the video unit.

The video unit component includes at least one of the following: a luma component of the video unit; a first chroma component of the video unit; or a second chroma component of the video unit.

In an embodiment, the apparatus further includes an eighth determination module. The eighth determination module is configured to determine a value of the video unit filtering switch flag, and determine, according to the value, whether to enable the loop filtering or not enable the loop filtering for a current video unit.

In an embodiment, the apparatus further includes a ninth determination module. The ninth determination module is configured to determine a value of a luma component switch flag of the video unit, and determine, according to the value, to enable the loop filtering for the luma component of the current video unit, or not enable the loop filtering for the luma component of the current video unit; determine a value of a first chroma component switch flag of the video unit, and determine, according to the value, to enable the loop filtering for the first chroma component of the current video unit, or not enable the loop filtering for the first chroma component of the current video unit; and determine a value of a second chroma component switch flag of the video unit, and determine, according to the value, to enable the loop filtering for the second chroma component of the current video unit, or not enable the loop filtering for the second chroma component of the current video unit.

In an embodiment, the apparatus further includes a tenth determination module. The tenth determination module is configured to determine a value of the video unit block-level filtering switch flag, and determine, according to the value, to enable the loop filtering for a coding block in the video unit, or not enable the loop filtering for the coding block in the video unit.

In an embodiment, the apparatus further includes a sixth filtering module. The sixth filtering module is configured to filter the video unit with the loop filtering mode turned on by using the loop filtering mode according to the video unit filtering coefficient absolute value and the video unit filtering coefficient sign.

In an embodiment, the loop filtering model structure information further includes a video unit block-level filter coefficient merge mode switch flag and a video unit block-level filter coefficient merge mode type flag. The video unit block-level filter coefficient merge mode switch flag is configured to indicate whether to enable a coefficient merge mode for the coding block in the video unit and a component of the coding block. The video unit block-level filter coefficient merge mode type flag is configured to indicate a position of a neighboring coding block of the current coding block in the video unit. The current coding block performs the loop filtering by using a filter coefficient of the neighboring coding block. A coding block component includes at least one of the following: a luma component, a first chroma component, and a second chroma component.

In an embodiment, the loop filtering model structure information further includes: a cross-component filtering mode switch flag, configured to indicate whether to enable a cross-component filtering mode for the coding block in the video unit and the component of the coding block or not. The embodiments of the present disclosure further provide a computer-readable storage medium, in which a computer program is stored. The computer program is configured to execute, when running, the steps in any of the above method embodiments.

In an exemplary embodiment, the computer-readable storage medium may include, but are not limited to, a U disk, a Read-Only Memory (ROM), an RAM, a mobile hard disk, a magnetic disk, a compact disc, and other media capable of storing the computer program. The embodiments of the present disclosure further provide an electronic apparatus, which includes a memory and a processor. The memory stores a computer program. The processor is configured to run the computer program to execute the steps in any of the above method embodiments.

In one exemplary embodiment, the electronic apparatus may further include a transmission device and an input/output device. The transmission device is connected with the processor, and the input/output device is connected with the processor.

The specific examples in the present embodiment may refer to the above embodiments and the examples described in the optional implementations, which will not be elaborated herein.

It is apparent that those skilled in the art should appreciate that the above modules and steps of the present disclosure may be implemented by a general-purpose computing apparatus, and they may be centralized in a single computing apparatus or distributed on a network composed of multiple computing apparatus; they may be implemented by a program code which is capable of being executed by the computing apparatus, so that they may be stored in a storage apparatus and executed by the computing apparatus; and in some situations, the presented or described steps may be executed in an order different from that described here; or they are made into integrated circuit modules, respectively; or multiple modules and steps of them are made into a single integrated circuit module to realize. Therefore, the present disclosure is not limited to any particular combination of hardware and software.

The above is only the preferred embodiments of the present disclosure and not intended to limit the present disclosure. For those skilled in the art, the present disclosure may have various modifications and variations. Any modifications, equivalent replacements, improvements and the like made within the principle of the present disclosure shall fall within the scope of protection of the present disclosure.

**Claims**

1.    A video coding and decoding loop filtering method, comprising:

   filtering a reconstructed picture of a current picture by using a first filter, so as to obtain a first reconstructed video unit;
   filtering the reconstructed picture by using a second filter, so as to obtain a second reconstructed video unit;
   determining a filter coefficient according to neighborhood information contained in a convolution template of the first reconstructed video unit and the second reconstructed video unit, wherein the neighborhood information is information of neighboring pixel points around a pixel point in the convolution template; and
   filtering, based on the convolution template and the filter coefficient, the first reconstructed video unit and the second reconstructed video unit to obtain a third reconstructed video unit.

2.    The method according to claim 1, wherein the determining a filter coefficient according to neighborhood information contained in a convolution template of the first reconstructed video unit and the second reconstructed video unit comprises:

   for each pixel point in a video unit of the reconstructed picture and a video unit of an original picture, determining a difference between the pixel point at each neighborhood position in the convolution template and each pixel point, multiplying the differences respectively to obtain a first pixel product, and determining a difference between the pixel point of the video unit of the original picture and the pixel point of the video unit of the reconstructed picture to obtain a covariance; and
   determining, based on a Wiener filtering method, the filter coefficient according to the covariance.

3.    The method according to claim 2, wherein the video unit of the reconstructed picture comprises a reconstructed picture, or a slice, or a coding block, or a coding tree block.

4.    The method according to claim 1, wherein the filtering, based on the convolution template and the filter coefficient, the first reconstructed video unit and the second reconstructed video unit to obtain a third reconstructed video unit comprises at least one of the following:

   performing, based on the convolution template, filtering processing on a luma component of the first reconstructed video unit and the second reconstructed video unit according to the filter coefficient;

performing, based on the convolution template, filtering processing on a first chroma component of the first reconstructed video unit and the second reconstructed video unit according to the filter coefficient; and

performing, based on the convolution template, filtering processing on a second chroma component of the first reconstructed video unit and the second reconstructed video unit according to the filter coefficient.

5. The method according to claim 1, wherein the filtering a reconstructed picture of a current picture by using a first filter comprises:

performing Deblocking Filter (DBF) on the reconstructed picture; or

performing Sample Adaptive Offset (SAO) loop filtering on the reconstructed picture; or

performing DBF and SAO loop filtering on the reconstructed picture; or

performing Luma Mapping with Chroma Scaling (LMCS) processing on the reconstructed picture.

6. The method according to claim 1, wherein the filtering the reconstructed picture by using a second filter, so as to obtain a second reconstructed video unit comprises:

performing neural network loop filtering on the reconstructed picture to obtain the second reconstructed video unit; or

performing neural network loop filtering on the reconstructed picture, and performing weighted summation on a neural network loop filtering result and the first reconstructed video unit, so as to obtain the second reconstructed video unit; or

performing neural network loop filtering on the reconstructed picture, and scaling the neural network loop filtering result according to an original picture, so as to obtain the second reconstructed video unit; or

performing other loop filtering except the neural network loop filtering on the reconstructed picture to obtain the second reconstructed video unit, wherein the other loop filtering comprises at least one of the following: DBF, SAO loop filtering, and LMCS.

7. The method according to claim 1, further comprising:

determining a first loss between a pixel of a video unit of the reconstructed picture and a pixel of an original picture after filtering according to the first reconstructed video unit, the second reconstructed video unit, and the filter coefficient;

determining a second loss between the pixel of the video unit of the reconstructed picture and the pixel of the original picture before filtering according to the first reconstructed video unit, the second reconstructed video unit, and the filter coefficient; and

determining whether to perform Cross-Component Adaptive (CCA) filtering on the video unit of the current picture according to the first loss and the second loss.

8. The method according to claim 1, further comprising:

determining a first loss between a pixel of a video unit of the reconstructed picture and a pixel of an original picture after filtering according to the first reconstructed video unit, the second reconstructed video unit, and the filter coefficient;

filtering through a preset filter coefficient, and determining a third loss between the pixel of the video unit of the reconstructed picture and the pixel of the original picture after filtering according to the first reconstructed video unit, the second reconstructed video unit, and the filter coefficient; and

according to the first loss and the third loss, determining to perform filtering processing through the filter coefficient, or determining to perform filtering processing through the preset filter coefficient.

9. The method according to claim 1, further comprising:

determining a first loss between a pixel of a video unit of the reconstructed picture and a pixel of an original picture after filtering according to the first reconstructed video unit, the second reconstructed video unit, and the filter coefficient;

determining a second loss between the pixel of the video unit of the reconstructed picture and the pixel of the original picture before filtering according to the first reconstructed video unit, the second reconstructed video unit, and the filter coefficient;

filtering the video unit of the current picture according to the filter coefficient of the neighboring video unit of the video unit of the current picture, and determining a fourth loss between the pixel of the video unit of the reconstructed picture and the pixel of the original picture after filtering; and

determining, according to the first loss, the second loss, and the fourth loss, the filter coefficient used by the video unit of the current picture, and performing filtering processing according to the determined filter coefficient.

10. The method according to claim 1, further comprising:

determining a first loss between a pixel of a video unit of the reconstructed picture and a pixel of an original picture after filtering according to the first reconstructed video unit, the second reconstructed video unit, and the filter coefficient;

determining a second loss between the pixel of the video unit of the reconstructed picture and the pixel of the original picture before filtering according to the first reconstructed video unit, the second reconstructed video unit, and the filter coefficient; and

determining whether to filter the video unit of the current picture according to the first loss and the second loss, recalculating the filter coefficient for the video unit with filtering turned on, again determining whether to filter according to the first loss and the second loss, and confirming whether to filter the video unit of the current picture after repeating N times.

11. The method according to claim 1, wherein the filtering, based on the convolution template and the filter coefficient, the first reconstructed video unit and the second reconstructed video unit to obtain a third reconstructed video unit comprises:

calculating, based on the first reconstructed video unit, a difference between a central pixel point and a neighborhood pixel point of the convolution template, and multiplying the difference by the filter coefficient of a corresponding position of the neighborhood pixel point to obtain a first result;

at the same time, calculating, based on the second reconstructed video unit, the difference between the central pixel point and the neighborhood pixel point of the convolution template, and multiplying the difference by the filter coefficient of the corresponding position of the neighborhood pixel point to obtain a second result; and

adding the first result, the second result, and the second reconstructed video unit, and then performing rounding processing to obtain the third reconstructed video unit.

12. The method according to any one of claims 1 to 11, wherein the convolution template comprises one of the following: a diamond-shaped template, a square template, and a cross template.

13. A video decoding method, comprising:

acquiring a bit stream containing a coded video sequence, and obtaining loop filtering control information corresponding to a loop filtering mode, wherein the loop filtering control information comprises a filter coefficient;

filtering a reconstructed picture of a current picture by using a first filter, so as to acquire a first reconstructed video unit;

filtering the reconstructed picture of the current picture by using a second filter, so as to acquire a second reconstructed video unit; and

filtering, based on a convolution template of the first reconstructed video unit and the second reconstructed video unit, and the filter coefficient, the first reconstructed video unit and the second reconstructed video unit to obtain a third reconstructed video unit.

14. The method according to claim 13, wherein the filtering a reconstructed picture of a current picture by using a first filter comprises:

performing Deblocking Filter (DBF) on the reconstructed picture; or
performing Sample Adaptive Offset (SAO) loop filtering on the reconstructed picture; or
performing DBF and SAO loop filtering on the reconstructed picture; or
performing Luma Mapping with Chroma Scaling (LMCS) processing on the reconstructed picture.

15. The method according to claim 13, wherein the filtering the reconstructed picture by using a second filter, so as to obtain a second reconstructed video unit comprises:

performing neural network loop filtering on the reconstructed picture to obtain the second reconstructed video unit; or

performing neural network loop filtering on the reconstructed picture, and performing weighted summation on a neural network loop filtering result and the first reconstructed video unit, so as to obtain the second reconstructed video unit; or

performing neural network loop filtering on the reconstructed picture, and scaling the neural network loop filtering result according to an original picture, so as to obtain the second reconstructed video unit; or

performing other loop filtering except the neural network loop filtering on the reconstructed picture to obtain the second reconstructed video unit, wherein the other loop filtering comprises at least one of the following: DBF, SAO loop filtering, and LMCS.

16. The method according to claim 13, wherein the filtering, based on a convolution template of the first reconstructed video unit and the second reconstructed video unit, and the filter coefficient, the first reconstructed video unit and the second reconstructed video unit to obtain a third reconstructed video unit comprises:

calculating, based on the first reconstructed video unit, a difference between a central pixel point and a neighborhood pixel point of the convolution template, and multiplying the difference by the filter coefficient of a corresponding position of the neighborhood pixel point to obtain a first result;

at the same time, calculating, based on the second reconstructed video unit, the difference between the central pixel point and the neighborhood pixel point of the convolution template, and multiplying the difference by the filter coefficient of the corresponding position of the neighborhood pixel point to obtain a second result; and

adding the first result, the second result, and the second reconstructed video unit, and then performing rounding processing to obtain the third reconstructed video unit.

17. The method according to claim 13, wherein the loop filtering information comprises at least one of the following:

a sequence-level filtering switch flag, configured to indicate that the loop filtering mode is turned on or turned off for a video sequence where a current video frame is located;

a filtered picture-level flag, configured to indicate whether loop filtering model information appears in picture header information or in slice header information; and

loop filtering model structure information, configured to indicate that the loop filtering is performed on a video unit to which the loop filtering mode is applied.

18. The method according to claim 17, further comprising:

determining a value of the sequence-level filtering switch flag; and

when the value of the sequence-level filtering switch flag is a first value, determining to enable the loop filtering for the current coded video sequence, and when the value of the sequence-level filtering switch flag is a second value, determining to not enable the loop filtering for the current coded video sequence, wherein the first value is different from the second value.

19. The method according to claim 17, further comprising:

determining a value of the filtered picture-level flag; and

when the value of the filtered picture-level flag is a third value, determining that the loop filtering model information appears in a picture header, and when the value of the filtered picture-level flag is a fourth value, determining that the loop filtering model information appears in a slice header, wherein the third value is different from the fourth value.

20. The method according to claim 17, wherein the video unit comprises a picture or a slice.

21. The method according to claim 17, wherein the loop filtering model structure information comprises at least one of the following:

a video unit filtering switch flag, configured to indicate that the loop filtering mode is turned on or turned off for the video unit;

a video unit component switch flag, configured to indicate that the loop filtering mode is turned on or turned off for a video unit component;

a video unit block level filtering switch flag, configured to indicate that the loop filtering mode is turned on or turned off at each level in the video unit;

a video unit filtering coefficient absolute value, configured to indicate a filtering coefficient absolute value corresponding to each level in the video unit; and

a video unit filtering coefficient sign, configured to indicate a filtering coefficient sign corresponding to each level in the video unit;

wherein the video unit component comprises at least one of the following:

> a luma component of the video unit;
> a first chroma component of the video unit; and
> a second chroma component of the video unit.

22. The method according to claim 21, further comprising:
determining a value of the video unit filtering switch flag, and determining, according to the value, to enable the loop filtering or not enable the loop filtering for a current video unit.

23. The method according to claim 21, further comprising:

determining a value of a luma component switch flag of the video unit, and determining, according to the value, to enable the loop filtering for the luma component of the current video unit, or not enable the loop filtering for the luma component of the current video unit;

determining a value of a first chroma component switch flag of the video unit, and determining, according to the value, to enable the loop filtering for the first chroma component of the current video unit, or not enable the loop filtering for the first chroma component of the current video unit; and

determining a value of a second chroma component switch flag of the video unit, and determining, according to the value, to enable the loop filtering for the second chroma component of the current video unit, or not enable the loop filtering for the second chroma component of the current video unit.

24. The method according to claim 21, further comprising:
determining a value of the video unit block-level filtering switch flag, and determining, according to the value, to enable the loop filtering for a coding block in the video unit, or not enable the loop filtering for the coding block in the video unit.

25. The method according to claim 13, further comprising:
filtering the video unit with the loop filtering mode turned on by using the loop filtering mode according to the video unit filtering coefficient absolute value and the video unit filtering coefficient sign.

26. The method according to claim 17, wherein the loop filtering model structure information further comprises:

a video unit block-level filter coefficient merge mode switch flag, configured to indicate whether to enable a coefficient merge mode for a coding block in the video unit and a component of the coding block; and

a video unit block-level filter coefficient merge mode type flag, configured to indicate a position of a neighboring coding block of the current coding block in the video unit, wherein the current coding block performs the loop filtering by using a filter coefficient of the neighboring coding block;

wherein a coding block component comprises at least one of the following: a luma component, a first chroma component, and a second chroma component.

27. The method according to claim 17, wherein the loop filtering model structure information further comprises:
a cross-component filtering mode switch flag, configured to indicate whether to enable a cross-component filtering mode for a coding block in the video unit and a component of the coding block or not.

28. A video coding and decoding loop filtering apparatus, comprising:

a first filtering module, configured to filter a reconstructed picture of a current picture by using a first filter, so as to obtain a first reconstructed video unit;

a second filtering module, configured to filter the reconstructed picture of the current picture by using a second filter, so as to obtain a second reconstructed video unit;

a first determination module, configured to determine a filter coefficient according to neighborhood information contained in a convolution template of the first reconstructed video unit and the second reconstructed video unit, wherein the neighborhood information is information of neighboring pixel points around a pixel point in the convolution template; and

a third filtering module, configured to filter, based on the convolution template and the filter coefficient, the first reconstructed video unit and the second reconstructed video unit to obtain a third reconstructed video unit.

29. A video decoding apparatus, comprising:

an acquisition module, configured to acquire a bit stream containing a coded video sequence, and obtain loop filtering control information corresponding to a loop filtering mode;

a first filtering module, configured to filter a reconstructed picture of a current picture by using a first filter, so as to acquire a first reconstructed video unit;

a second filtering module, configured to filter the reconstructed picture of the current picture by using a second filter, so as to acquire a second reconstructed video unit; and

a third filtering module, configured to filter, based on a convolution template of the first reconstructed video unit and the second reconstructed video unit, and a filter coefficient, the first reconstructed video unit and the second reconstructed video unit to obtain a third reconstructed video unit.

30. A computer-readable storage medium, in which a computer program is stored, wherein when running, the computer program is configured to perform the method according to any one of claims 1 to 12 and 13 to 27.

31. An electronic apparatus, comprising a memory and a processor, wherein the memory stores a computer program, and the processor is configured to execute the computer program, so as to perform the method according to any one of claims 1 to 12, or any one of 13 to 27.

Input/output device | Transmission device
108 | 106

Processor
102

Memory
104

Fig.1

A reconstructed picture of a current picture is filtered by using a first filter, so as to obtain a first reconstructed video unit ⌒ S202

The reconstructed picture is filtered by using a second filter, so as to obtain a second reconstructed video unit ⌒ S204

A filter coefficient is determined according to neighborhood information contained in a convolution template of the first reconstructed video unit and the second reconstructed video unit, where the neighborhood information is information of neighboring pixel points around a pixel point in the convolution template ⌒ S206

Based on the convolution template and the filter coefficient, the first reconstructed video unit and the second reconstructed video unit are filtered to obtain a third reconstructed video unit ⌒ S208

Fig.2

Rec                              NNout

Fig.3

Fig.4

Fig.5

Fig.6

Fig.7

Fig.8

Fig.9

Rec NN

(a)

Rec NN

(b)

Fig.10

Rec

| tl | t | tr |
|----|---|----|
| l  | c | r  |
| bl | b | br |

NN

| tl | t | tr |
|----|---|----|
| l  | c | r  |
| bl | b | br |

Fig.11

Rec NN

(a)

Rec NN

(b)

Fig.12

A bit stream containing a coded video sequence is acquired, and loop filtering control information corresponding to a loop filtering mode is obtained — S1302

A reconstructed picture of a current picture is filtered by using a first filter, so as to acquire a first reconstructed video unit — S1304

The reconstructed picture of the current picture is filtered by using a second filter, so as to acquire a second reconstructed video unit — S1306

Based on a convolution template of the first reconstructed video unit and the second reconstructed video unit, and the filter coefficient, the first reconstructed video unit and the second reconstructed video unit are filtered to obtain a third reconstructed video unit — S1308

Fig.13

```
                        CCA input1              ┌ ─ ─ ─ ─ ─ ─ ─ ─ ─ ─ ─ ─ ─ ─ ─ ┐
                        (traditionally related): │  CCA                          │
            ┌─────────┐                          │ ┌───────────┐   ┌───────────┐ │
         ┌─▶│  DBF    │──────────────────────────┼▶│    CCA    │   │    CCA     │ │
         │  └─────────┘      DBFout              │ │ filtering  │──▶│ filtering  │─┼──▶
         │                                       │ │coefficient │   │ operation  │ │  out
 Nnin ───┤                CCA input2             │ │   parse    │   │            │ │
         │  ┌─────────┐    (NN related):          │ └───────────┘   └───────────┘ │
         └─▶│   NN    │──────────────────────────┼▶                               │
            │filtering│       NNout              └ ─ ─ ─ ─ ─ ─ ─ ─ ─ ─ ─ ─ ─ ─ ─ ┘
            └─────────┘
（a reconstructed
picture before DBF）
```

Fig.14

First filtering module ⟋152

Second filtering module ⟋154

First determination module ⟋156

Third filtering module ⟋158

Fig.15

Acquisition module ⟋162

First filtering module ⟋152

Second filtering module ⟋154

Third filtering module ⟋158

Fig.16

## INTERNATIONAL SEARCH REPORT

| International application No. |
|---|
| **PCT/CN2023/094306** |

### A. CLASSIFICATION OF SUBJECT MATTER

H04N19/117(2014.01)i; H04N19/82(2014.01)i; H04N19/124(2014.01)i; G06F17/15(2006.01)i

According to International Patent Classification (IPC) or to both national classification and IPC

### B. FIELDS SEARCHED

Minimum documentation searched (classification system followed by classification symbols)

IPC: H04N G06F

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, WPABS, CNKI, IEEE, JCT-VC: 编码, 环路滤波, 解码, 卷积, 邻域, 滤波, 系数, 视频, 邻近, 邻域, 相邻, 重建, coefficient, convolution, filter+, video, reconstruct+, neighborhood, adjacent, encod+, Loop filter+, decod+, cod+

### C. DOCUMENTS CONSIDERED TO BE RELEVANT

| Category* | Citation of document, with indication, where appropriate, of the relevant passages | Relevant to claim No. |
|---|---|---|
| A | CN 104247434 A (QUALCOMM INC.) 24 December 2014 (2014-12-24) description, paragraphs [0025]-[0134], and figures 4-12 | 1-31 |
| A | CN 101971632 A (ERICSSON TELEFON AB. L. M.) 09 February 2011 (2011-02-09) entire document | 1-31 |
| A | US 2012307898 A1 (CHONO KEIICHI et al.) 06 December 2012 (2012-12-06) entire document | 1-31 |
| A | US 2019230354 A1 (KOREA ADVANCED INSTITUTE OF SCIENCE AND TECHNOLOGY) 25 July 2019 (2019-07-25) entire document | 1-31 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 July 2023** | **05 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/094306**

| Patent document cited in search report | | | Publication date (day/month/year) | Patent family member(s) | | | Publication date (day/month/year) |
|---|---|---|---|---|---|---|---|
| CN | 104247434 | A | 24 December 2014 | None | | | |
| CN | 101971632 | A | 09 February 2011 | CN | 101971632 | B | 16 October 2013 |
| US | 2012307898 | A1 | 06 December 2012 | None | | | |
| US | 2019230354 | A1 | 25 July 2019 | US | 11095887 | B2 | 17 August 2021 |

Form PCT/ISA/210 (patent family annex) (July 2022)

**REFERENCES CITED IN THE DESCRIPTION**

**Patent documents cited in the description**

• CN 202211182900